(19) Europäisches Patentamt
European Patent Office
Office européen des brevets

(11) **EP 1 019 274 B1**

(12) **EUROPÄISCHE PATENTSCHRIFT**

(45) Veröffentlichungstag und Bekanntmachung des Hinweises auf die Patenterteilung:
**04.06.2003 Patentblatt 2003/23**

(21) Anmeldenummer: **98959789.3**

(22) Anmeldetag: **29.09.1998**

(51) Int Cl.⁷: $B60T\ 13/66$, $B60T\ 13/74$

(86) Internationale Anmeldenummer:
**PCT/EP98/06190**

(87) Internationale Veröffentlichungsnummer:
**WO 99/016650 (08.04.1999 Gazette 1999/14)**

(54) **VERFAHREN ZUM AUFBRINGEN DEFINIERTER BETÄTIGUNGSKRÄFTE**

METHOD FOR APPLYING DEFINED OPERATING FORCES

PROCEDE POUR APPLIQUER DES FORCES D'ACTIONNEMENT DEFINIES

(84) Benannte Vertragsstaaten:
**DE ES FR GB IT**

(30) Priorität: **29.09.1997 DE 19742920**

(43) Veröffentlichungstag der Anmeldung:
**19.07.2000 Patentblatt 2000/29**

(73) Patentinhaber: **Continental Teves AG & Co. oHG 60488 Frankfurt (DE)**

(72) Erfinder:
- **SCHWARZ, Ralf
  D-64297 Darmstadt (DE)**
- **ISERMANN, Rolf
  D-64342 Seeheim (DE)**

(56) Entgegenhaltungen:
**EP-A- 0 233 360       DE-A- 19 621 671
DE-U- 29 622 787      US-A- 5 496 097**

**Beschreibung**

Die Erfindung betrifft ein Verfahren zum Aufbringen definierter Betätigungskräfte bei einer mittels eines Aktuators über ein Getriebe elektrisch betätigbaren Bremse, bei dem beim Spannen der Bremse ein erster Zusammenhang zwischen der Aktuatorposition und dem Aktuatormoment besteht und beim Lösen der Bremse ein zweiter Zusammenhang zwischen der Aktuatorposition und dem Aktuatormoment besteht, sowie Regelsysteme zur Durchführung des Verfahrens.

Ein derartiges Verfahren ist z.B. aus dem deutschen Gebrauchsmuster DE 296 22 787 UI bekannt. Bei der Durchführung des vorbekannten Verfahrens wird eine Kennlinie, die den Zusammenhang zwischen dem dem Aktuator zuzuführenden, eingesteuerten Motorstrom und der bei diesem Motorstrom zu erwartenden Betätigungskraft darstellt, mittels einer elektronischen Steuervorrichtung derart abgefragt, daß der gewünschten Betätigungskraft der entsprechende Stromwert zugeordnet wird. Der Ermittlung des Betätigungskraft-Istwerts dienen Radsensoren, wobei die Kennlinie veränderbar ist, so daß der gespeicherte Zusammenhang zwischen Motorstrom und Betätigungskraft dem tatsächlichen Zusammenhang angepaßt werden kann.

Weniger vorteilhaft ist insbesondere die zur Durchführung des bekantnen Verfahrens notwendige Verwendung der Radsensoren anzusehen, deren Signale durch Drift und Offset gestört werden. Aus diesem Grund ist das vorbekannte Verfahren unzuverlässig und seine Durchführung notwendig.

Es ist daher Aufgabe der vorliegenden Erfindung, Verfahren sowie Regelsysteme vorzuschlagen, die es ermöglichen, die Funktionszuverlässigkeit bei der Durchführung des Verfahrens zu erhöhen und die weitere Möglichkeiten zur Aufbringung definierter Betätigungskräfte darstellen. Die Verfahren sollen dabei insbesondere ohne Verwendung der teueren, störanfälligen Sensoren durchgeführt werden können.

Diese Aufgabe wird verfahrensmäßig dadurch gelöst, daß die sich aus dem ersten sowie zweiten Zusammenhang ergebenden Aktuatormomente zur Ermittlung des Wirkungsgrades des Getriebes im Sinne der Ermittlung eines Aktuatormomentwertes ausgewertet werden, der beim Wirkungsgrad des Getriebes η=1 aufgebracht werden muß.

Zur Konkretisierung des Erfindungsgedankens werden die Aktuatormomente bei gleichen Aktuatorpositionen ausgewertet.

Bei einer vorteilhaften Weiterbildung des Erfindungsgegenstandes wird das Aktuatormoment aus dem Aktuatorstrom bzw. dem Aktuatorstrom und der Aktuatorspannung bzw. dem Aktuatorstrom und der Aktuatorposition bzw. der Aktuatorspannung und der Aktuatorposition bzw. dem Aktuatorstrom, der Aktuatorspannung, und der Aktuatorposition ermittelt.

Außerdem ist es besonders vorteilhaft, wenn aus dem Aktuatormomentwert über die Getriebeübersetzung ein Schätzwert der Betätigungskraft ermittelt wird.

Nach einem weiteren vorteilhaften Erfindungsmerkmal wird zur Erhöhung der Güte des Verfahrens eine einem Aktuatorpositionsbereich entsprechende, durch die beiden Zusammenhänge begrenzte Teilfläche ausgewertet. Die Auswertung erfolgt dabei vorzugsweise derart, daß

　　　a) der Aktuatormomentwert durch Mittelung des maximalen und des minimalen Aktuatormomentes berechnet wird,

　　　b) der Aktuatormomentwert durch Berechnung der Ordinate der die Fläche halbierenden horizontalen Geraden bestimmt wird,

　　　c) die Aktuatormomente aus beiden Zusammenhängen bei jeweils gleicher Aktuatorposition gemittelt werden und durch die entstehenden Mittelwerte eine Ausgleichsgerade gelegt wird, deren Ordinate als Schätzwert für den Aktuatormomentwert verwendet wird,

　　　d) der Schwerpunkt der Teilfläche berechnet wird und seine Ordinate als Schätzwert für den Aktuatormomentwert verwendet wird.

Eine Verbesserung der angestrebten Regelung wird nach einem weiteren vorteilhaften Erfindungsmerkmal dadurch erreicht, daß die Aktuatormomente vor der Ermittlung des Wirkungsgrades des Getriebes um die Trägheitsmomente der Bremse korrigiert werden.

Außerdem ist es besonders sinnvoll, wenn die Bremse bei der Betätigung zusätzlich derart angesteuert wird, daß eine Aktuatormoment-Aktuatorposition-Fläche durchfahren wird, z.B., wenn dem Betätigungssignal der Bremse ein sinus- oder cosinusförmiges Ansteuersignal überlagert wird.

Eine erste erfindungsgemäße Regelschaltung zur Durchführung des vorhin erwähnten Verfahrens zeichnet sich dadurch aus, daß

a) ein Lageregler vorgesehen ist, dem als Eingangssignal die Regeldifferenz zwischen einem die Aktuator-Sollposition und einem die Aktuator-Istposition repräsentierenden Signalen zugeführt wird und mit dessen Ausgangssignal der Aktuator über eine elektronische Leistungseinheit angesteuert wird, ein Bremsenmodell-Adaptionsmodul vorgesehen ist, dem zur Adaption der dem Wirkungsgrad des Getriebes $\eta=1$ entsprechende Aktuatormomentwert, der die dazugehörigen Aktuatormomente aus einem oder beiden Zusammenhängen zwischen der Aktuatorposition und dem Aktuatormoment bzw. zwischen der Aktuatorposition und dem Aktuatormoment oder die die dazugehörige Aktuatorposition repräsentierenden Signalen zugeführt werden und das Modellgrößen für ein Bremsenmodell erzeugt,

c) dem Lageregler ein Lagesollwertgenerator vorgeschaltet ist, der das Bremsenmodell beinhaltet und dem ein der gewünschten Betätigungskraft entsprechendes Signal sowie die adaptierten Modellgrößen zugeführt werden und der aus dem Bremsenmodell das Aktuator-Sollpositionssignal erzeugt,

d) ein Schätzmodul vorgesehen ist, dem das dem Aktuatormoment und das der Aktuatorposition entsprechende Signal zugeführt werden und das den dem Wirkungsgrad des Getriebes $\eta=1$ entsprechenden Aktuaromentwert, die dazugehörigen Aktuatormomente aus einem oder beiden Zusammenhängen zwischen der Aktuatorposition und dem Aktuatormoment bzw. zwischen der Aktuatorposition und dem Aktuatormoment oder die die dazugehörige Aktuatorposition repräsentierenden Signale erzeugt.

Eine zweite erfindungsgemäße Regelschaltung zur Durchführung des obigen Verfahrens zeichnet sich vorzugsweise dadurch aus, daß

a) ein Momentenregler vorgesehen ist, dem als Eingangssignal die Regeldifferenz zwischen einem das Aktuator-Sollmoment und einem das Aktuator-Istmoment repräsentierende Signale zugeführt wird und mit dessen Ausgangssignal der Aktuator über eine elektronische Leistungseinheit angesteuert wird,
ein Bremsenmodell-Adaptionsmodul vorgesehen ist, dem zur Adaption der dem Wirkungsgrad des Getriebes $\eta=1$ entsprechende Aktuatormomentwert, die die dazugehörigen Aktuatormomente aus einem oder beiden Zusammenhängen zwischen der Aktuatorposition und dem Aktuatormoment bzw. zwischen der Aktuatorposition und dem Aktuatormoment oder die die dazugehörige Aktuatorposition repräsentierenden Signale zugeführt werden und das Modellgrößen für ein Bremsenmodell erzeugt,

c) dem Momentenregler ein Momentensollwertgenerator vorgeschaltet ist, der das Bremsenmodell beinhaltet und dem ein der gewünschten Betätigungskraft entsprechendes Signal sowie die adaptierten Modellgrößen zugeführt werden und der aus dem Bremsenmodell das Aktuator-Sollmomentsignal erzeugt,

d) ein Schätzmodul vorgesehen ist, dem das dem Aktuatormoment und das der Aktuatorposition entsprechende Signal zugeführt werden und das dem Wirkungsgrad des Getriebes $\eta=1$ entsprechenden Aktuatormomentwert, das die dazugehörigen Aktuatormomente aus einem oder beiden Zusammenhängen zwischen der Aktuatorposition und dem Aktuatormoment bzw. zwischen der Aktuatorposition und dem Aktuatormoment oder die die dazugehörige Aktuatorposition repräsentierenden Signale erzeugt.

Eine dritte erfindungsgemäße Regelschaltung zur Durchführung des obigen Verfahrens zeichnet sich vorzugsweise dadurch aus, daß

a) ein Betätigungsregler vorgesehen ist, dem als Eingangssignal die Regeldifferenz zwischen einem den Betätigungskraft-Wunschwert und einem den rekonstruierten Betätigungskraft-Istwert repräsentierenden Signalen zugeführt wird und mit dessen Ausgangssignal der Aktuator über eine elektronische Leistungseinheit angesteuert wird,
a) ein Bremsenmodell-Adaptionsmodul vorgesehen ist, dem zur Adaption der dem Wirkungsgrad des Getriebes $\eta=1$ entsprechende Aktuatormomentwert, die die dazugehörigen Aktuatormomente aus einem oder beiden Zusammenhängen zwischen der Aktuatorposition und dem Aktuatormoment bzw. zwischen der Aktuatorposition und dem Aktuatormoment oder die die dazugehörige Aktuatorposition repräsentierenden Signale zugeführt werden und das Modellgrößen für ein Bremsenmodell erzeugt,
c) dem Betätigungskraftregler ein Betätigungskraftrekonstruktionsmodell vorgeschaltet ist, das das Bremsenmodell beinhaltet und dem ein das Aktuator-Istmoment oder ein die Aktuator-Istposition repräsentierendes Signal sowie die adaptierten Modellgrößen zugeführt werden und der aus dem Bremsenmodell den Betätigungskraft-Istwert erzeugt,
d) ein Schätzmodul vorgesehen ist, dem das dem Aktuatormoment und das der Aktuatorposition entsprechende Signal zugeführt werden und das den dem Wirkungsgrad des Getriebes η=1 entsprechenden Aktuatormomentwert, die die dazugehörigen Aktuatormomente aus einem oder beiden Zusammenhängen zwischen der Aktuatorposition und dem Aktuatormoment bzw. zwischen der Alctuatorposition und dem Aktuatormoment oder die die dazugehörige Aktuatorposition repräsentierenden Signale erzeugt.

Dabei ist es besonders vorteilhaft, wenn das Bremsenmodell-Adaptionsmodul die Bremsenmodellgrößen mittels Parameterschätzung berechnet.

Bei weiteren vorteilhaften Ausgestaltungen des Erfindungsgegenstandes ist vorgesehen, daß das Bremsenmodell die Steifigkeit oder den Wirkungsgrad der Bremse abbildet.

Weitere Einzelheiten, Merkmale und Vorteile der Erfindung gehen aus der nachfolgenden Beschreibung von fünf Ausführungsbeispielen unter Bezugnahme auf die beiliegende Zeichnung hervor, in der für einander entsprechende Einzelteile gleiche Bezugszeichen verwendet werden. In der Zeichnung zeigt:

Fig. 1          eine diagrammatische Darstellung der Abhängigkeit des Aktuatormomentes von der Aktuatorposition bzw. der Arbeitsweise des erfindungsgemäßen Verfahrens;

Fig. 2          eine diagrammatische Darstellung des Zeitverlaufs der Aktuatorposition am Beispiel der Überlagerung des Betätigungssignals mit einem Sinussignal;

Fig. 3 bis 8          diagrammatische Darstellungen verschiedener Methoden zur Bestimmung des dem Wirkungsgrad des Getriebes η = 1 entsprechenden fiktiven Aktuatormomentes;

Fig. 9 bis 13          fünf Ausführungsbeispiele von zur Durchführung des erfindungsgemäßen Verfahrens verwendbaren Regelschaltungen.

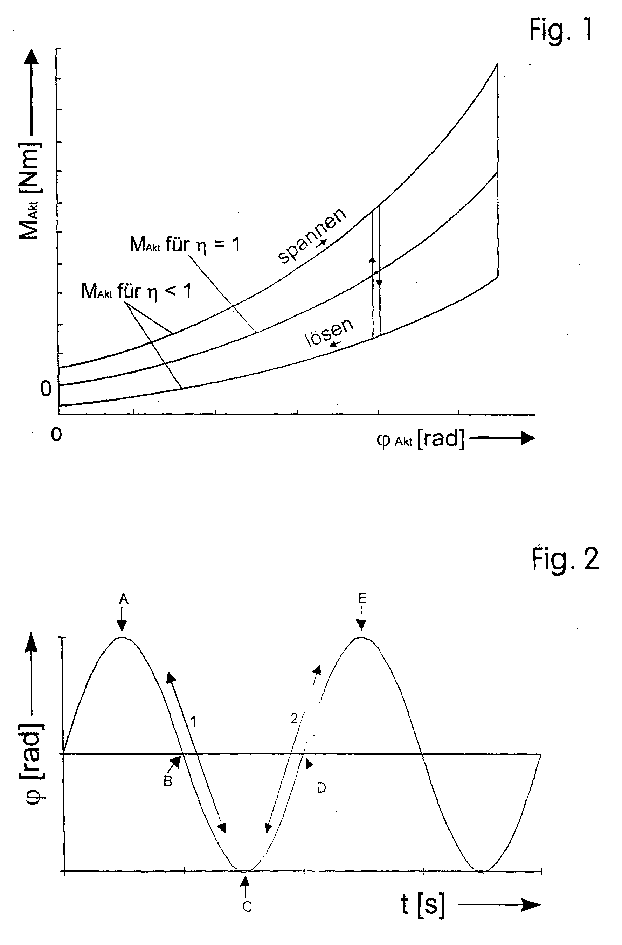

Bei der Erklärung des in Fig. 1 gezeigten Diagramms wird angenommen, daß der vorhin erwähnte Aktuator durch einen Elektromotor gebildet ist. Das Aktuatormoment läßt sich bei eine Elektromotor entweder aus einer oder mehreren der Größen Motorstrom $I_{Akt}$, Motorspannung $U_{Akt}$ und Motorposition $\varphi_{Akt}$ berechnen. Die Motorposition $\varphi_{Akt}$ muß meßbar sein (bei vielen Motortypen konstruktionsbedingt gegeben, z.B. elektronisch kommutierter Synchronmotor, Switched Reluctance Motor) oder aus dem Motorstrom $I_{Akt}$ und der Motorspannung $U_{Akt}$ rekonstruierbar sein.

In Fig. 1 ist der prinzipielle Verlauf des Aktuatormomentes $M_{Akt}$ über der Aktuatorposition $\varphi_{Akt}$ aufgetragen. Für einen Wirkungsgrad von η=1 liegen die Aktuatormomentwerte beim quasistatischen Zuspannen (Beschleunigung $\omega_{Akt}$ so gering, daß Trägheitsmomente J und Massen m vernachlässigbar) sowie beim Lösen auf der gleichen Kurve. Treten für einen Wirkungsgrad von η = 1 nicht zu vernachlässigende Trägheitsmomente auf, so läßt sich aus dem gemessenen Aktuatormoment $M_{Akt, dyn}$ über die Trägheiten und die Beschleunigung ($\dot{\omega}_{Akt}$) ein entsprechendes stati-sches Moment $M_{Akt,stat}$ bestimmen.

$$M_{Akt,stat,\eta=1} = M_{Akt,dyn,\eta=1} - \dot{\omega}_{Akt} J - m \dot{\omega}_{Akt} v^2$$

wobei v ein die Übersetzung des zwischen Aktuator und Bremse geschalteten Getriebes berücksichtigender Faktor ist.

Die gesuchte Betätigungskraft $F_{Bet}$ kann für den Fall η = 1 direkt aus dem statischen Aktuatormoment be-rechnet werden:

$$F_{Bet} = \frac{M_{Akt,stat}}{v}$$

Für den Fall η < 1 verläuft das statische Aktuatormoment beim Zuspannen oberhalb der Kennlinie für η = 1 und beim Lösen unterhalb dieser Kennlinie. Die entstehende Fläche ist antiproportional zum Wirkungsgrad der Bremse, d.h. je größer die beschriebene Fläche, desto geringer der Wirkungsgrad der Bremse.

Für η < 1 läßt sich das dynamische Aktuatormoment wie folgt ausdrücken:

$$M_{Akt,stat,\eta=1} = M_{Akt,dyn,\eta<1} - (J + mv^2)\dot{\omega}_{akt} - d_{ges}\, \omega_{Akt} - sign(\omega_{Akt})\cdot(M_{CO} + \gamma\cdot F_B)$$

wobei $\omega_{Akt}$ die Aktuatorgeschwindigkeit, $d_{ges}$ die viskose Reibung, $M_{C0}$ die "trockene" Reibung und γ ein Proportionalitätsfaktor zur Berücksichtigung des Betätigungskrafteinflusses auf die trockene Reibung darstellen.

Für $\eta < 1$ ist eine Berechnung des Aktuatormomentwertes $M_{Akt,stat,\eta=1}$ aufgrund der unbekannten Reibparameter nicht direkt möglich. Man kann sich jedoch eine besondere Eigenschaft elektrischer Bremsen zunutze machen. Konstruktionsbedingt wechselt nämlich bei Drehrichtungsumkehr, also zwischen dem Zustand "Spannen" und dem Zustand "Lösen" der Bremse nur das Vorzeichen der "trockenen" Reibungsanteile. Der Absolutwert der trockenen Reibung ist aufgrund der Bauart der reibungsbehafteten Bauteile (Lager, z.B. Kugellager, Tonnenlager etc. sowie Spindeltriebe, z.B. Rollengewindetriebe) drehrichtungsunabhängig. Diese Eigenschaft ist jedoch nur unter der Annahme richtig, daß an gleicher Position die gleiche Spannkraft als Gegenkraft anliegt, was jedoch für ein Durchfahren gleicher Positionen in geringem zeitlichen Abstand richtig ist, da sich die Steifigkeitskennlinie (Zusammenhang zwischen Betätigungskraft und Aktuatorposition) nur sehr langsam ändert.

Bestimmt man also die beiden Momente $M_{Akt,\eta<1,spannen}$ und $M_{Akt,\eta<1,lösen}$ bei gleicher Aktuatorposition $\varphi_{Akt}$ jedoch für unterschiedliche Drehrichtungen, so ist der trockene Reibanteil von seinem Betrag für beide Drehrichtungen (Spannen und Lösen) gleich. Folglich kann durch Addition der beiden Momente $M_{Akt,\eta<1,spannen}$ und $M_{Akt,\eta<1,lösen}$ bei gleicher Aktuatorposition $\varphi_{Akt}$ die trockene Reibung ($M_{C0} + \gamma F_{Bet}$) eliminiert werden.

Mit den beiden Momenten $M_{Akt,dyn,\eta<1,spannen}$ und $M_{Akt,dyn,\eta<1,lösen}$ bei gleicher Aktuatorposition läßt sich der gesuchte Aktuatormomentwert $M_{Akt,stat,\eta=1}$ ($\eta=1$) demnach wie folgt bestimmen:

$$M_{Akt,stat,\eta=1} = \frac{1}{2} \cdot [(M_{Akt,dyn,\eta<1,spannen} + M_{Akt,dyn,\eta<1,lösen})$$

$$- (J + m\ v^2) \cdot (\dot{\omega}_{Akt,spannen} + \dot{\omega}_{Akt,lösen})$$

$$- d_{ges} \cdot (\omega_{Akt,spannen} + \omega_{Akt,lösen})]$$

In dieser Gleichung ist jedoch immer noch der unbekannte, zeitvariante Parameter $d_{ges}$ (viskose Reibung) enthalten. Zur Lösung dieses Problems bieten sich zwei Vorgehensweisen an:

- $d_{ges}$ kann durch Identifikationsverfahren geschätzt werden. Dazu ist es zweckmäßig, die Bremse im gelüfteten Zustand ($F_{Bet} = 0$ also in Phasen, in denen die Bremse nicht vom Fahrer oder vom übergeordneten Regelsystem betätigt wird) dynamisch anzuregen, und $d_{ges}$ mittels Parameterschätzung zu bestimmen.

- Es ist jedoch günstiger sicherzustellen, daß die Punkte gleicher Position bzw. gleicher Betätigungskraft beim Spannen und beim Lösen mit betragsmäßig gleicher Geschwindigkeit durchfahren werden. Dann wird der Term, mit dem $d_{ges}$ multipliziert wird, zu Null und der Einfluß der viskosen Reibung wird ebenfalls mit sich selbst kompensiert. Dies kann man z.B. erreichen, indem man dem Aktuatorpositionssollsignal oder dem Betätigungskraftsollsignal einen Sinus mit kleiner Amplitude (vom Fahrer nicht spürbar) überlagert und so "Hysterezyklen" durchfährt (siehe Fig. 1). Die Geschwindigkeit $\omega_{Akt}$ hat dann den Verlauf eines Cosinus, so daß sich an gleicher Aktuatorposition die gleiche Geschwindigkeit einstellt.

Vorteil des letzteren Verfahrens unter Verwendung einer Anregung, die dazu führt, daß gleiche Positionen mit gleichen Geschwindigkeiten durchfahren werden, ist also, daß die drei unbekannten Reibungsparameter viskose Reibung $d_{ges}$, coulombsche Reibung $M_{C0}$ und der die Last berücksichtigende Reibfaktor $\gamma$ nicht bekannt sein müssen. Sie werden bei der Berechnung mit sich selbst kompensiert. Es ergibt sich dadurch folgender vereinfachter Zusammenhang:

$$M_{Akt,stat,\eta=1}\ \frac{1}{2} \cdot [(M_{Akt,dyn,\eta<1,spannen} + M_{Akt,dyn,\eta<1,lösen})$$

$$- (J + mv^2) \cdot (\dot{\omega}_{Akt,spannen} + \dot{\omega}_{Akt,lösen})]$$

Es bleiben also bei geeigneter Anregung nur noch die Trägheitsmomente und Massen, die aus den Aktuatormomenten herausgerechnet werden müssen.

Indem für eine Aktuatorposition oder Betätigungskraft jeweils das erforderliche Moment zum Spannen und zum Lösen der Bremse bestimmt wird, kann also der Wirkungsgrad bzw. die Betätigungskraft berechnet werden.

Die Gestaltung des Meßverfahrens bzw. der Anregung bestimmt dabei, in welchem Umfang nachträgliche Korrekturrechnungen bzw. zusätzliche Identifikationsverfahren notwendig sind.

Die praktische Umsetzung des beschriebenen Prinzips erfordert, daß eine Bewegungsumkehr in der Bremse erfolgt. Es müssen somit Bereiche ausgewertet werden, in denen durch die Betätigungskraftvorgabe eine Bewegungsumkehr vorhanden ist oder in denen diese Bewegungsumkehr künstlich angeregt wurde. Im letzteren Fall wird also ein entsprechendes Positionssignal oder Kraftsignal vorgegeben. Da dieses Anregungssignal nur kleine Änderungen um einen Arbeitspunkt vorgibt bzw. es nur Sinn macht, eine Bewegungsumkehr in einem kleinen Bereich auszuwerten, darf der Zusammenhang zwischen Kraft und Position in diesem Bereich als linear angenommen werden. Somit unterscheiden sich die Kurvenformen des Kraft- bzw. Positionssignals nicht und die Unterscheidung ist für die folgenden prinzipiellen Betrachtungen nicht relevant. Bei der Auswahl des Signals bei künstlicher Anregung muß man sich vor allem daran orientieren, daß die Betätigungskraftschätzung während der normalen Benutzung der Bremse durchgeführt werden soll. Folglich muß man bestrebt sein, daß trotz der notwendigen Richtungsumkehr zwischen Spannen und Lösen die Betätigungskraft zumindest im Mittel dem Fahrerwunsch entspricht und daß die Schwankungen vernachlässigbar gering bleiben. Für das Positions- bzw. Kraftsignal, das eine Bewegungsumkehr in der Bremse bewirken soll, bietet sich eine Sinusschwingung an. Daher ist es naheliegend, dem vom Fahrer oder einem übergeordneten Regelsystem vorgegebenen Bremskraftsollwert einen Sinus zu überlagern. Bei dieser Vorgehensweise folgt der Mittelwert der Bremskraft immer dem Fahrerwunsch. Wird das Verfahren auf Bereiche angewandt, in denen die Bewegungsumkehr durch die Betätigungskraftvortgabe hervorgerufen wird, erfordert dies Korrekturrechnungen, da im allgemeinen die Punkte gleicher Betätigungskraft mit unterschiedlichen Geschwindigkeiten und wechselnden Beschleunigungen durchfahren werden.

Wenn das Positions- bzw. Kraftsignal, wie in Fig. 2 dargestellt, eine Sinusschwingung um einen konstanten Mittelwert ist, sind die Voraussetzungen bezüglich der Geschwindigkeit, unter denen keine Reibungskorrektur erforderlich ist, erfüllt. Daher ist es zweckmäßig, in gewissen Abständen den aktuellen Fahrerwunsch zu speichern und diesem Wert für die Dauer der Messung eine Schwingung zu überlagern. Um die Forderung nach möglichst minimalem Eingriff in das Bremsverhalten zu erfüllen, sollte die Meßdauer dabei möglichst kurz sein. Allerdings muß sie mindestens eine Periodendauer betragen, wodurch sich Grenzen für die verwendbare Frequenz ergeben. Außerdem muß sichergestellt werden, daß das Verfahren nur bei annähernd konstantem Fahrerwunsch gestartet wird und daß bei einer starken Änderung des vom Fahrer vorgegebenen Sollwerts das Verfahren gestoppt wird, damit die Ist-Bremskraft dem Sollwert wieder folgt. Durch die vorgeschlagene Methode läßt sich der Wirkungsgrad bzw. die Betätigungskraft elektrischer Bremsen schätzen. Der Schätzwert steht jedoch nicht kontinuierlich zur Verfügung.

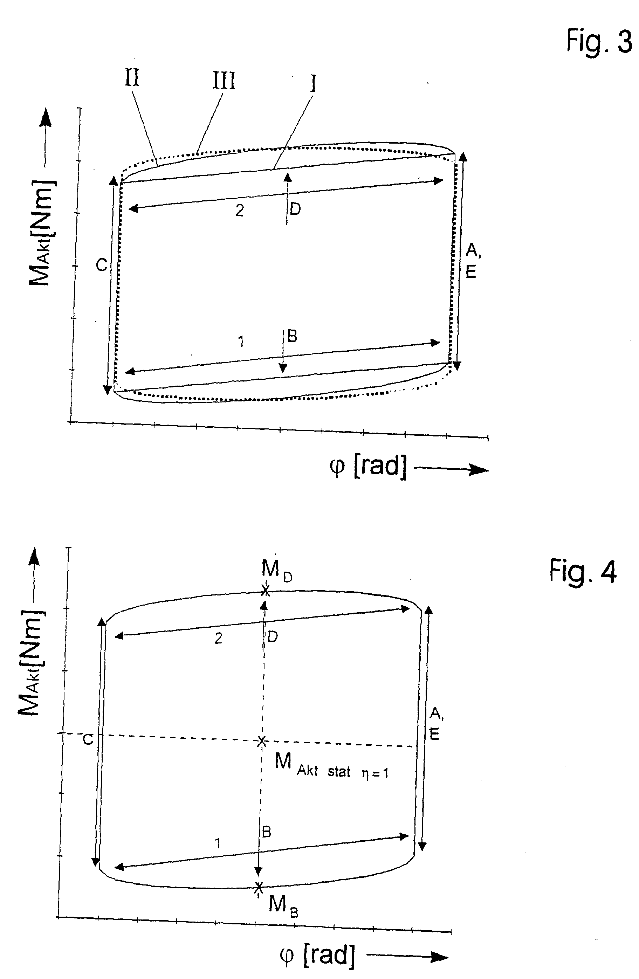

Für die Betrachtung sollen zunächst alle dynamischen Einflüsse vernachlässigt werden. Der zu erwartende Verlauf. der in Fig. 3 mit "I" bezeichnet ist, ist am zweckmäßigsten in einem Koordinatensystem mit der Aktuatorposition als Abszisse und dem Drehmoment des Aktuators als Ordinate dargestellt, wobei die einzelnen Abschnitte den zugehörigen Phasen der Schwingung (Fig. 2) durch Buchstaben und Zahlen zugeordnet sind. Im folgenden werden diese Diagramme ausgehend vom ersten Maximum des Sinus besprochen.

Der Punkt A (Fig 2) ist das Schwingungsmaximum und damit auch ein Umkehrpunkt der Bewegung. Er wird im Drehmoment-Position-Diagramm in Fig. 3 in einen Bereich abgebildet, weil durch die Umkehr der Bewegungsrichtung auch das Reibmoment sein Vorzeichen wechselt und somit ein Sprung im Aktuatormoment auftritt. Das zur Aufrechterhaltung der Position erforderliche Aktuatormoment vermindert sich dabei, denn ab diesem Punkt hemmt die Reibung den Rücklauf der Bremse und unterstützt damit das Halten der Position bzw. der Betätigungskraft.

Die fallende Flanke 1 wird ebenfalls in einen Bereich abgebildet. Das Aktuatormoment nimmt dabei mit der Position ab, weil das Gegenmoment, das aus der Spannkraft resultiert. sinkt (Federcharakteristik).

Im Punkt C, dem Minimum, kommt es wieder zu einer Bewegungsumkehr. Dadurch erhöht sich das erforderliche Moment, weil nun zusätzlich zum Drehmoment, das aus der Spannkraft resultiert, auch die Reibung überwunden werden muß. Somit wird dieser Punkt auch in einen Bereich im Drehmoment-Position-Diagramm abgebildet.

Die steigende Flanke (in Fig. 2 mit 2 bezeichnet) wird in einen Bereich abgebildet. Proportional zur Zunahme der Position steigt auch das erforderliche Drehmoment an, da die Spannkraft mit dem Weg zunimmt und dieser Zusammenhang für die betrachteten kleinen Änderungen um einen Arbeitspunkt als linear angenommen werden darf.

Punkt E in Fig. 2 entspricht wieder dem Punkt A. Damit beginnt der Zyklus von neuem.

Wenn man die Effekte berücksichtigt, die durch die viskose Reibung auftreten, ergeben sich andere Drehmoment-Position-Diagramme, die in Fig. 3 mit "II" und "III" gekennzeichnet sind. Bei diesen Diagrammen, von denen beim Diagramm "II" die viskose Reibung berücksichtigt und die Trägheit nicht berücksichtigt wurden, während beim Diagramm "III" sowohl die viskose Reibung als auch die Trägheit berücksichtigt wurden unterscheiden sich die Bereiche 1 und 2 vom gerade besprochenen Diagramm "I".

Bereich 1 ist leicht nach unten ausgewölbt, weil die viskose Reibung die Rückwärtsbewegung des Getriebes hemmt, also weniger Aktuatormoment zum Halten der vorgegebenen Betätigungskraft notwendig ist. Das Extremum der Wölbung liegt bei Punkt B, denn dort ist auch die Geschwindigkeit maximal.

Bereich 2 ist nach oben gewölbt, weil das Vorzeichen der Geschwindigkeit hier positiv ist, also die viskose Reibung zusätzlich zum Gegenmoment, das aus der Betätigungskraft resultiert, vom Aktuator überwunden werden muß. Das Extremum der Wölbung liegt hier bei Punkt D, da hier das Maximum der Geschwindigkeit für diesen Bewegungsabschnitt zu finden ist.

Bisher ist der Einfluß des Drehmomentes unberücksichtigt geblieben, das aufgewendet werder muß, um die Massen zu beschleunigen. Dieser Effekt soll nun auch in die Überlegungen einbezogen werden.

Da das Positionssignal sinusförmig ist, ist auch die zweite Ableitung wieder ein Sinus. Folglich ist der Betrag der Beschleunigung proportional zur Abweichung von der mittleren Position.

Das Vorzeichen wird klar, wenn man bedenkt, daß in der ersten Hälfte (Abschnitt zwischen C und D) des Bereichs 2 die Geschwindigkeit von Null aus zu ihrem Maximum ansteigt. Folglich wird für die Beschleunigung der Massen ein zusätzliches Moment benötigt: Der Verlauf des Drehmoments liegt über dem, der sich ohne Berücksichtigung der Trägheit ergäbe. In der zweiten Hälfte des Bereichs 2 nimmt die Geschwindigkeit ab. Damit entlastet die Energie, die in den Massen gespeichert ist, den Antrieb und das Moment sinkt unter die Kurve, die ohne Berücksichtigung der Trägheit durchlaufen würde.

Im Bereich 1 ist das Verhalten analog. Hier ist in der ersten Hälfte (Abschnitt zwischen A und B) das Aktuatormoment aufgrund der Trägheit vermindert, da weiter verzögert wird. In der zweiten Hälfte ist wegen der einsetzenden Beschleunigung ein zusätzliches Moment erforderlich.

Zusammenfassend läßt sich also sagen, daß die Einflüsse durch die Beschleunigung der Trägheiten die Steigung in den Bereichen 1 und 2, die aus der Zunahme der Betätigungskraft resultiert, vermindert werden. Da der Betrag der Beschleunigung quadratisch von der Frequenz abhängt, kann bei hohen Frequenzen der Einfluß der Trägheitskräfte sogar überwiegen, so daß sich eine negative Steigung ergibt.

**Methoden zur Auswertung der Ergebnisse**

Aus den Ausgangssignalen, deren prinzipieller Verlauf im vorherigen Abschnitt für eine Sinusüberlagerung erläutert wurde, soll letztlich ein Schätzwert für den Wirkungsgrad bzw. die Betätigungskraft gewonnen werden. Im folgenden werden verschiedene Möglichkeiten dazu vorgestellt. Für die weiteren Betrachtungen wird angenommen, daß die oben beschriebenen Voraussetzungen durch die Form des gewählten Eingangssignals erfüllt sind.

Da der Schätzwert für die Zuspannkraft dem Positionsmittelwert der Schwingung zugeordnet sein soll, legt Fig. 4 es nahe, für die Berechnung von $M_{\mathrm{Akt,stat,\eta=1}}$ die Aktuatormomente an den Punkten B und D zu verwenden (man beachte, daß die Werte für $M_B$ und $M_D$ bereits um die Trägheitseinflüsse korrigiert sind). Für die Praxis ist dieser Ansatz aber offensichtlich ungeeignet, da die Schätzung dabei auf zwei isolierten Meßwerten beruhen würde und damit extrem empfindlich gegen Störungen wäre. Daher werden verschiedene Auswertungsmethoden vorgeschlagen.

Allen Methoden ist gemeinsam, daß sie nur eine Periode der Schwingung benutzen, also genau einen Durchlauf durch die Schleife, wie sie in Fig. 4 dargestellt ist.

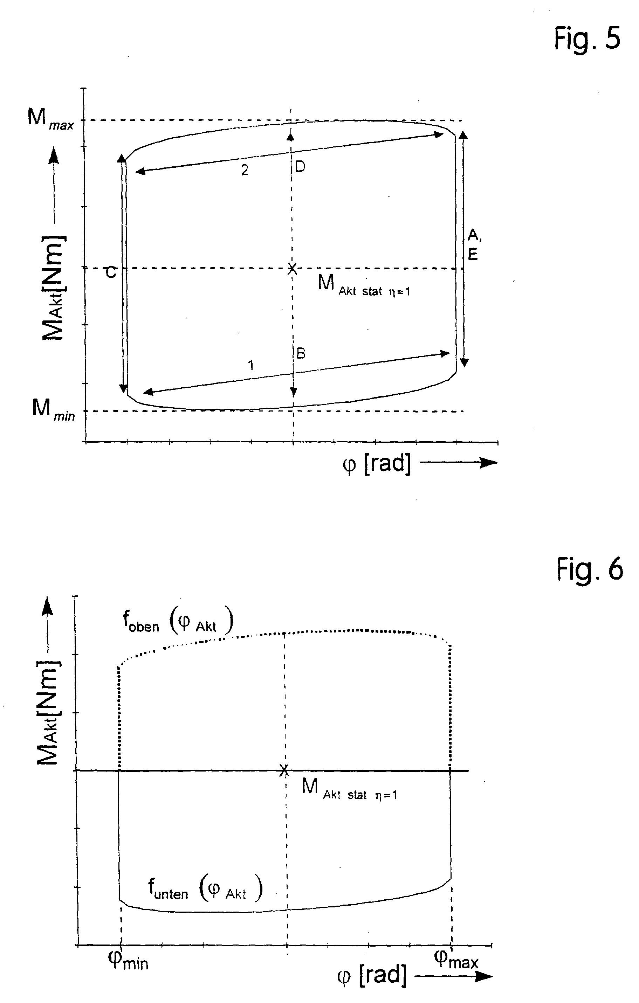

Die diagrammatisch in Fig. 5 dargestellte Methode ist sehr einfach, denn bei ihr stützt sich der Schätzwert wiederum nur auf zwei Meßwerte.

Als Schätzwert wird dabei gemäß

$$M_{\mathrm{Akt,stat,\eta=1,\,schätz}} = \frac{\min(M_{\mathrm{Akt,dyn,\eta<1}}) + \max(M_{\mathrm{Akt,dyn,\eta<1}})}{2}$$

der Mittelwert von Minimum und Maximum des Aktuatormomentes verwendet, der im Idealfall genau mit dem gesuchten Wert zusammenfällt.

Bei der in Fig. 6 dargestellten Methode wird zur Berechnung des Schätzwertes für $M_{\mathrm{Akt,\,stat,-\eta=1}}$ die Ordinate der die Fläche horizontal halbierenden Geraden herangezogen. Zu diesem Zweck wird der Kurvenzug in eine obere und eine untere Begrenzungslinie geteilt. Die Funktionen $f_{\mathrm{oben(\varphi Akt)}}$ bzw. $f_{\mathrm{unten(\varphi Akt)}}$, die diese Linien darstellen, werden integriert, wodurch sich die Flächen $F_{\mathrm{oben}}$ und $F_{\mathrm{unten}}$ ergeben. $M_{\mathrm{Akt,stat,\_\eta=1}}$ ergibt sich somit aus:

$$M_{\mathrm{Akt,stat,\eta=1,schätz}} = \frac{1}{2}\cdot\frac{F_{\mathrm{oben}} + F_{\mathrm{unten}}}{\varphi_{\mathrm{max}} - \varphi_{\mathrm{min}}}$$

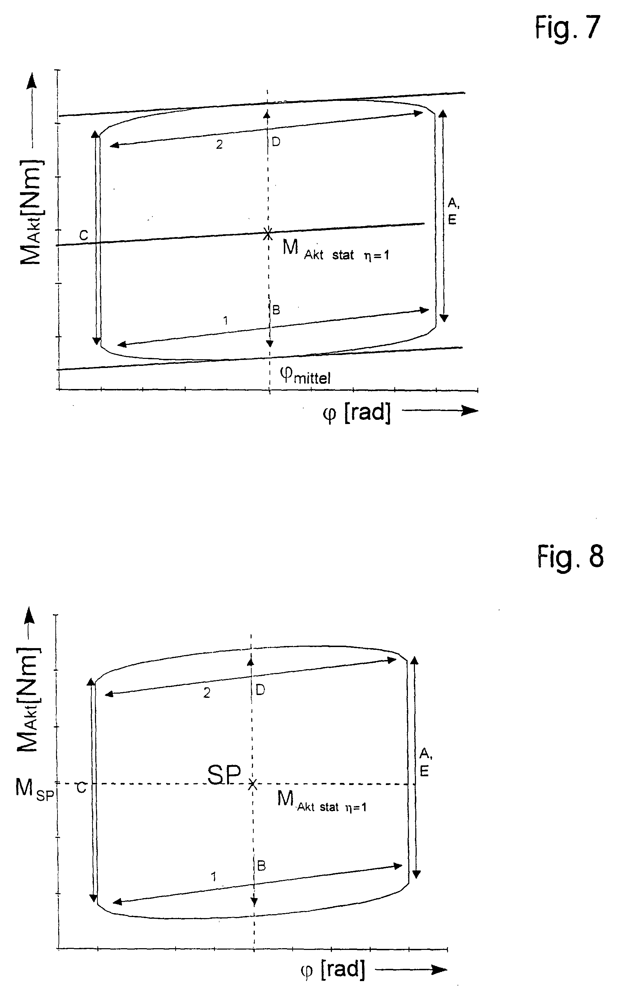

Bei der in Fig. 7 dargestellten Methode werden die Bereiche 1 und 2 des Kurvenzuges durch Geraden angenähert. Dabei werden Steigung und Achsenabschnitt so gewählt, daß die Summe der Fehlerquadrate minimiert wird. Es ist offensichtlich, daß es wenig zweckmäßig wäre, die senkrechten Bereiche A und C mit in diese Näherung einzubeziehen. Folglich darf die Gerade nur an die Meßwerte angepaßt werden, die in einem Bereich in der Mitte des Kurvenzugs liegen.

Aus den beiden Geraden wird eine mittlere Gerade gebildet, die im Idealfall genau durch den Punkt ($\varphi_{\mathrm{Akt,mittel}}$, $M_{\mathrm{Akt,stat,\eta=1}}$) geht. Die Schätzgleichung lautet also:

$$M_{\text{Akt,stat},\eta=1,\text{schätz}} = \frac{y_{\text{oben}} + y_{\text{unten}}}{2} + \frac{m_{\text{oben}} + m_{\text{unten}}}{2} \cdot \varphi_{\text{Akt,mittel}}$$

wobei $y_{\text{oben}}$ und $y_{\text{unten}}$ die Achsenabschnitte und $m_{\text{oben}}$ und $m_{\text{unten}}$ die Steigungen der jeweiligen Geraden bezeichnen.

Fig. 4 macht deutlich, daß der Punkt mit den Koordinaten ($\varphi_{\text{Akt,mittel}}$, $M_{\text{Akt,stat},\eta=1}$) im Idealfall mit dem Schwerpunkt der Fläche zusammenfällt. Daher wird bei der in Fig. 8 dargestellten Methode die Ordinate des Schwerpunkts als Schätzwert für $M_{\text{Akt,stat},\eta=1}$ verwendet.

Zur Berechnung des Schwerpunkts wird der Kurvenzug gemäß Fig. 6 in eine obere und eine untere Kurve zerlegt. Die Schwerpunktsberechnung erfolgt dann durch Integration nach folgenden Gleichungen:

Für den oberen Kurvenzug:

$$y_{\text{s,oben}} = \frac{\displaystyle\int_{\varphi_{\text{Akt,min}}}^{\varphi_{\text{Akt,max}}} \left[f_{\text{oben}}(\varphi_{\text{Akt}})\right]^2 d\varphi_{\text{Akt}}}{2 \cdot F_{\text{oben}}}$$

$$F_{\text{oben}} = \int_{\varphi_{\text{Akt,max}}}^{\varphi_{\text{Akt,min}}} f_{\text{oben}}(\varphi_{\text{Akt}}) d\varphi_{\text{Akt}}$$

Für den unteren Kurvenzug

$$y_{\text{s,unten}} = \frac{\displaystyle\int_{\varphi_{\text{Akt,min}}}^{\varphi_{\text{Akt,max}}} \left[f_{\text{unten}}(\varphi_{\text{Akt}})\right]^2 d\varphi_{\text{Akt}}}{2 \cdot F_{\text{unten}}}$$

$$F_{\text{unten}} = \int_{\varphi_{\text{Akt,max}}}^{\varphi_{\text{Akt,min}}} f_{\text{unten}}(\varphi_{\text{Akt}}) d\varphi_{\text{Akt}}$$

Für den zu schätzenden Aktuatormomentwert $M_{\text{Akt,stat},\eta=1,\text{schätz}}$ ergibt sich daraus:

$$M_{\text{Akt,stat},\eta=1,\text{schätz}} = y_{\text{s}} = \frac{y_{\text{s,oben}} \cdot F_{\text{oben}} + y_{\text{s,unten}} \cdot F_{\text{unten}}}{F_{\text{oben}} - F_{\text{unten}}}$$

Wie bereits oben erwähnt, steht der Aktuatormoment-Schätzwert $M_{\text{Akt},\eta=1,\text{schätz}}$ nicht kontinuierlich zur Verfügung. Er wird vielmehr beim Auswerten der Fläche nur einmal ermittelt. Für eine Regelung zum Aufbringen definierter Betätigungskräfte ist jedoch eine kontinuierliche Rückführung notwendig.

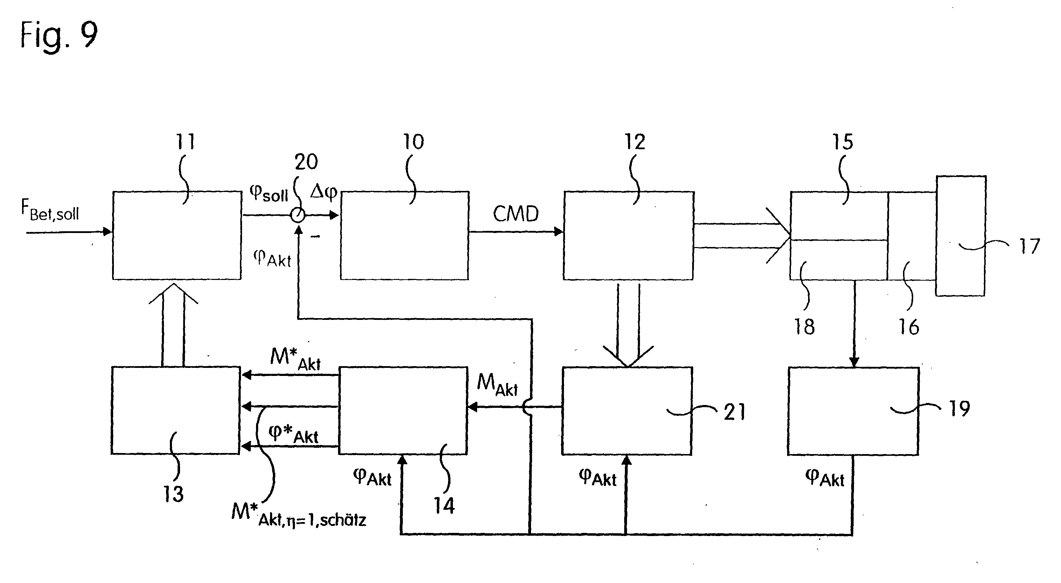

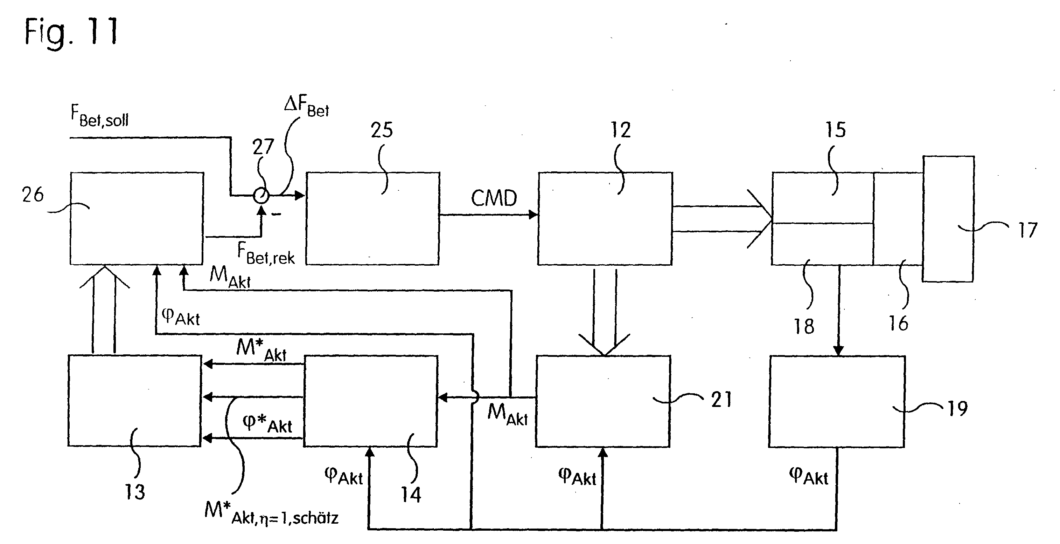

Im Zusammenhang mit den folgenden Figuren 9 bis 14 wird beschrieben, wie der Aktuatormoment-Schätzwert

$M_{Akt,\eta=1,\text{schätz}}$ erfindungsgemäß dazu verwendet wird, ein Modell der Bremse bzw. der Raddynamik zu adaptieren, um über das Modell eine kontinuierliche Rückführungsgröße bereitstellen zu können.

Die in Fig. 9 dargestellte erfindungsgemäße Regelschaltung zum Aufbringen definierter Betätigungskräfte besteht im wesentlichen aus einem Lageregler 10, einem dem Lageregler 10 vorgeschalteten Lagesollwertgenerator 11, einer dem Lageregler 10 nachgeschalteten elektronischen Leistungseinheit 12, einem Bremsenmodell-Adaptionsmodul 13 sowie einem Schätzmodul 14. Die elektronische Leistungseinheit 12, der als Eingangssignal das Ausgangssignal CMD (Command = Stellgröße) des Lagereglers 10 zugeführt wird, erzeugt elektrische Ausgangsgrößen (z.B. eine Aktuatorspannung $U_{Akt}$ und oder einen Aktuatorstrom $I_{Akt}$), mit denen ein lediglich schematisch angedeuteter Aktuator 15 angesteuert wird, der unter Zwischenschaltung eines Getriebes 16 eine elektromechanisch betätigbare Bremse betätigt, die mit dem Bezugszeichen 17 versehen ist. Der Aktuator 15, der vorzugsweise durch einen Elektromotor gebildet ist, ist vorzugsweise mit einem Winkelmeßsystem 18 ausgestattet, dessen der Aktuator-Istposition entsprechendes Signal vorzugsweise einer Lagesignalaufbereitungsschaltung 19 zugeführt wird, deren Ausgangssignal $\varphi_{Akt}$ einer Summationsstelle 20, einem Aktuatormomentberechnungsmodul 21 sowie dem vorhin erwähnten Schätzmodul 14 zur Verfügung gestellt wird. In der Summationsstelle 20 wird aus einem eine Aktuator-Sollposition repräsentierenden Signal $\varphi_{soll}$ und dem vorhin erwähnten Signal $\varphi_{Akt}$ eine Regelabweichung $\Delta\varphi_{Akt}$ gebildet, die als Eingangsgröße des Lagereglers 10 dient. Das Signal $\varphi_{soll}$ wird vom Lagesollwertgenerator 11 erzeugt, der ein Bremsenmodell enthält und dem ein einem Betätigungskraftwunsch entsprechendes Signal $F_{Bet,soll}$ zugeführt wird. Dem Bremsenmodell werden adaptierte Modellgrößen zur Verfügung gestellt, die im Bremsenmodell-Adaptionsmodul 13 aus den Ausgangssignalen $M^*_{Akt,\eta=1,\text{schätz}}$ und $\varphi^*_{Akt}$ und/oder $M^*_{Akt}$ des Schätzmoduls 14 erzeugt werden, dem als Eingangsgröße der im Aktuatormomentberechnungsmodul 21 ermittelte Aktuatormoment $M_{Akt}$ zugeführt wird. Die Berechnung des Aktuatormomentes erfolgt mit von der elektronischen Leistungseinheit 12 gelieferten Aktuatoreingangsgrößen und gegebenenfalls dem die Aktuator-Istposition repräsentiernden Signal $\varphi_{Akt}$.

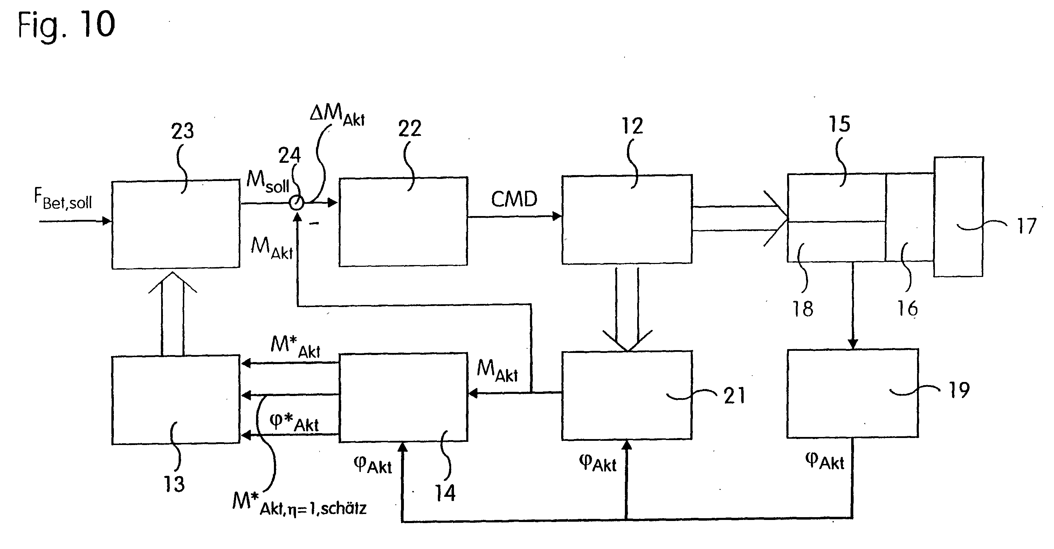

Bei der in Fig. 10 dargestellten Regelschaltung sind die bereits im Zusammenhang mit Fig. 9 erwähnten Bestandteile mit den gleichen Bezugszeichen versehen. Der Unterschied gegenüber der in Fig. 9 gezeigten Schaltung besteht darin, daß ein Momentenregler 22 vorgesehen ist, dem ein Momentensollwertgenerator 23 vorgeschaltet ist. Der Momentensollwertgenerator 23, der das Bremsenmodell beinhaltet und dem als Eingangssignal das vorhin erwähnte Betätigungskraftwunschsignal $F_{Bet,soll}$ zugeführt wird, erzeugt ein das Aktuator-Sollmoment $M_{soll}$ repräsentierendes Signal, aus dem in einer zweiten Summationsstelle 24 eine dem Momentenregler 22 zuzuführende Regelabweichung $\Delta M_{Akt}$ gebildet wird, indem von $M_{soll}$ das vorhin erwähnte, das Aktuator-Istmoment $M_{Akt}$ repräsentierende Signal subtrahiert wird. Das Aktuator-Istmomentsignal $M_{Akt}$ wird wieder vom Aktuatormomentberechnungsmodul 21 geliefert. Ansonsten entsprechen sowohl die Signalerzeugung als auch deren Verarbeitung weitgehend denen, die bereits im Zusammenhang mit Fig. 9 beschrieben wurden.

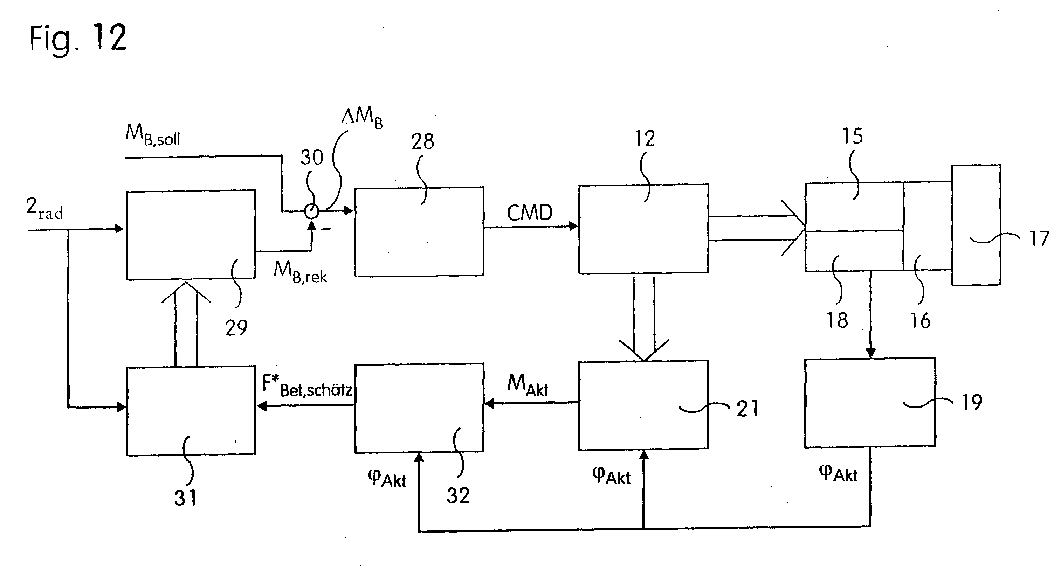

Die in Fig. 11 dargestellte dritte Regelschaltung weist einen Betätigungskraftregler 25 auf, dem als Eingangsgröße eine Regelabweichung $\Delta F_{Bet}$ zugeführt wird, die durch Subtraktion eines eine rekonstruierte Betätigungskraft repräsentierenden Signals $F_{Bet,rek}$ von dem bereits vorhin erwähnten Betätigungskraftwunschsignal $F_{Bet,soll}$ in einer dritten Summationsstelle 27 gebildet wird. Das der rekonstruierten Betätigungskraft entsprechende Signal $F_{Bet,rek}$ wird dabei vorzugsweise von einem Betätigungskraftrekonstruktionsmodul 26 geliefert, das das Bremsenmodell beinhaltet und dem als Eingangsgrößen das Aktuator-Istpositionssignal $\varphi_{Akt}$ und/oder der im Aktuatormomentberechnungsmodul 21 ermittelte Aktuatormomentwert $M_{Akt}$ zugeführt werden.

Bei den in Fig. 9 bis 11 gezeigten Ausführungen der erfindungsgemäßen Regelschaltung kann es besonders vorteilhaft sein, wenn das Bremsenmodell-Adaptionsmodul 13 die Modellgrößen mittels Parameterschätzung berechnet. Das Bremsenmodell kann dabei vorzugsweise entweder die Steifigkeit der Bremse 17 oder deren Wirkungsgrad abbilden.

Bei der in Fig. 12 dargestellten vierten Regelschaltungsvariante ist ein Bremsmomentregler 28 vorgesehen, dem als Eingangsgröße eine Regelabweichung $\Delta M_B$ zugeführt wird, die durch Subtraktion eines ein rekonstruiertes Bremsmoment repräsentierenden Signals $M_{B,rek}$ von einem Bremsmomentwunschsignal $M_{B,soll}$ in einer vierten Summationsstelle 30 gebildet wird. Das dem rekonstruierten Bremsmoment entsprechende Signal $M_{B,rek}$ wird dabei vorzugsweise von einem Bremsmomentrekonstruktionsmodul 29 geliefert, das einen Zusammenhang zwischen dem am Rad auftretenden Schlupf $\lambda_{rad}$ und dem dazugehörigen Bremsmoment beinhaltet und dem als Eingangsgrößen das dem Radschlupf entsprechende Signal $\lambda_{rad}$ sowie adaptierte Kennliniengrößen zugeführt werden. Die adaptierten Kennliniengrößen werden dabei vorzugsweise in einem Kennlinien-Adaptionsmodul 31 erzeugt, dem das Radschlupf-Signal $\lambda_{rad}$ sowie ein geschätzter Betätigungskraftwert $F^*_{Bet,schätz}$ zugeführt werden, der von einem gegenüber den Ausführungsbeispielen gemäß Fig. 9 bis 11 modifizierten Schätzmodul 32 geliefert wird.

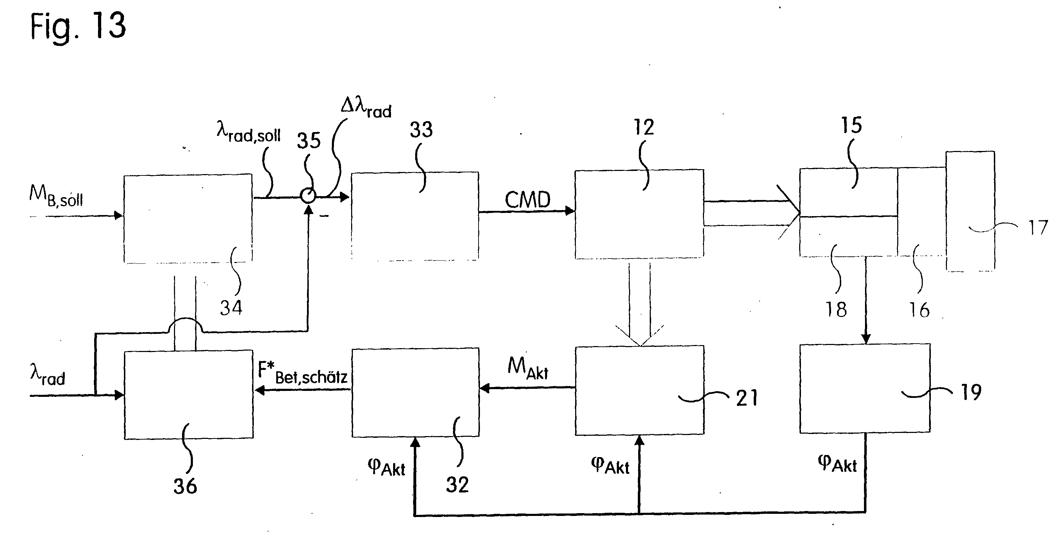

Die fünfte Regelschaltung gemäß Fig. 13 zeichnet sich dadurch aus, daß ein Schlupfregler 33 vorgesehen ist, dem als Eingangsgröße eine Regelabweichung $\Delta_{\lambda rad}$ zugeführt wird, die durch Subtraktion des im Zusammenhang mit Fig. 12 erwähnten Radschlupfsignals $\lambda_{rad}$ von einem Radschlupfsollsignal $\lambda_{rad,soll}$ in einer fünften Summationsstelle 35 gebildet wird. Das dem gewünschten Radschlupf entsprechende Signal $\lambda_{rad,soll}$ wird dabei vorzugsweise von einem dem Schlupfregler 33 vorgeschalteten Radschlupfsollwertgenerator 34 geliefert, der einen Zusammenhang zwischen dem am Rad auftretenden Schlupf $\lambda_{rad}$ und dem dazugehörigen Bremsmoment bzw. eine diesen Zusammenhang darstellende Kennlinie beinhaltet und dem als Eingangsgrößen das im Zusammenhang mit Fig. 12 erwähnte Bremsmomentwunschsignal $M_{B,soll}$ sowie adaptierte Kennliniengrößen zugeführt werden. Die adaptierten Kennliniengrößen werden, ähnlich wie bei der in Fig. 12 gezeigten Ausführung, in einem Kennlinien-Adaptionsmodul 31 erzeugt, dem das Radschlupf-Signal $\lambda_{rad}$ sowie der oben erwähnte geschätzte Betätigungskraftwert $F^*_{Bet,schätz}$ zugeführt werden.

Bei den in Fig. 12 und 13 gezeigten Ausführungen der erfindungsgemäßen Regelschaltung kann es besonders vorteilhaft sein, wenn das Kennlinien-Adaptionsmodul 31 bzw. 36 die Kennlinie mittels Parameterschätzung adaptiert.

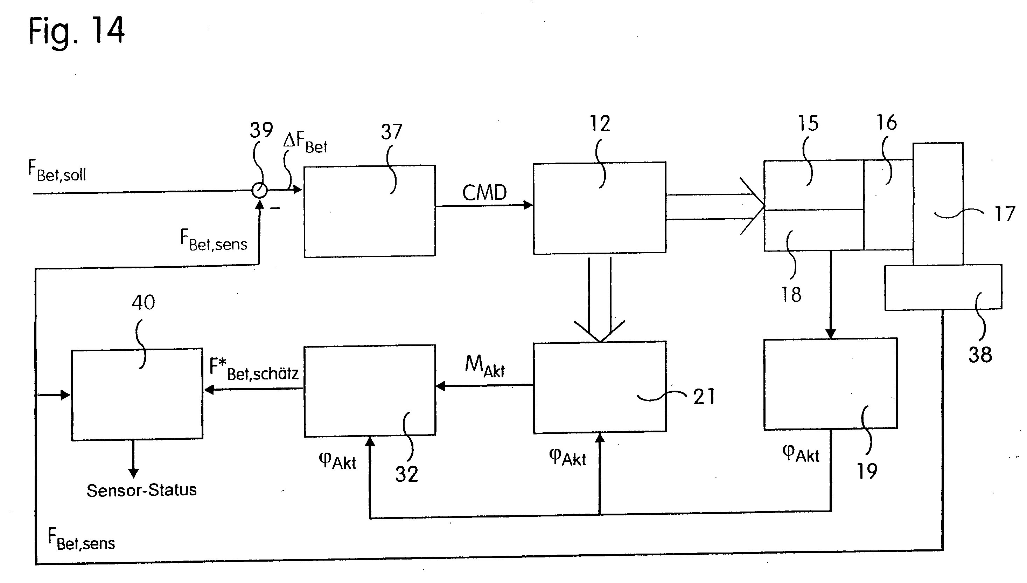

Die in Fig. 14 dargestellte sechste Regelschaltung weist schließlich einen Betätigungskraftregler 37 auf, dem, ähnlich wie bei der in Fig. 11 gezeigten Ausführung, als Eingangsgröße die Regelabweichung $\Delta F_{Bet}$ zugeführt wird, die durch Subtraktion einer mittels eines Betätigungskraftsensors 38 an der Bremse 17 sensierten Betätigungskraft $F_{Bet,sens}$ von dem bereits vorhin erwähnten Betätigungskraftwunschsignal $F_{Bet,soll}$ in einer sechsten Summationsstelle 39 gebildet wird. Das der sensierten Betätigungskraft entsprechende Signal $F_{Bet,sens}$ wird außerdem einem Betätigungskraftsensor-Überwachungsmodul 40 zugeführt, dem als zweite Eingangsgröße der im Zusammenhang mit Fig. 12 und 13 erwähnte geschätzte Betätigungskraftwert $F^*_{Bet,schätz}$ zugeführt wird, und der den Betätigungskraftsensor 38 überwacht.

## Patentansprüche

1. Verfahren zum Aufbringen definierter Betätigungskräfte bei einer mittels eines Aktuators über ein Getriebe elektrisch betätigbaren Bremse, bei dem beim Spannen der Bremse ein erster Zusammenhang zwischen der Aktuatorposition ($\varphi_{Akt}$) und dem Aktuatormoment ($M_{Akt}$) besteht und beim Lösen der Bremse ein zweiter Zusammenhang zwischen der Aktuatorposition ($\varphi_{Akt}$) und dem Aktuatormoment ($M_{Akt}$) besteht, **dadurch gekennzeichnet, daß** die sich aus dem ersten sowie dem zweiten Zusammenhang ergebenden Aktuatormomente ($M_{Akt}$) zur Ermittlung des Wirkungsgrades ($\eta$) des Getriebes im Sinne der Ermittlung eines Aktuatormomentwertes ($M_{Akt,\eta=1}$) ausgewertet werden, der beim Wirkungsgrad des Getriebes $\eta=1$ aufgebracht werden muß.

2. Verfahren nach Anspruch 1, **dadurch gekennzeichnet, daß** die Aktuatormomente bei gleichen Aktuatorpositionen ($\varphi_{Akt}$) ausgewertet werden.

3. Verfahren nach Anspruch 1 oder 2 **dadurch gekennzeichnet, daß** das Aktuatormoment aus dem Aktuatorstrom ($I_{Akt}$) bzw. dem Aktuatorstrom ($I_{Akt}$) und der Aktuatorspannung ($U_{Akt}$) bzw. dem Aktuatorstrom ($I_{Akt}$) und der Aktuatorposition ($\varphi_{Akt}$) bzw. der Aktuatorspannung ($U_{Akt}$) und der Aktuatorposition ($\varphi_{Akt}$) bzw. dem Aktuatorstrom ($I_{Akt}$), der Aktuatorspannung ($U_{Akt}$) und der Aktuatorposition ($\varphi_{Akt}$) ermittelt wird.

4. Verfahren nach Anspruch 3, **dadurch gekennzeichnet, daß** aus dem Aktuatormomentwert ($M_{Akt,\eta=1}$) über die Getriebeübersetzung ein Schätzwert der Betätigungskraft ($F_{Bet,schätz}$) ermittelt wird.

5. Verfahren nach einem der Ansprüche 1 bis 4, **dadurch gekennzeichnet, daß** eine einem Aktuatorpositionsbereich entsprechende, durch die beiden Zusammenhänge begrenzte Teilfläche ausgewertet wird.

6. Verfahren nach Anspruch 5, **dadurch gekennzeichnet, daß** die Teilfläche derart ausgewertet wird, daß der Aktuatormomentwert ($M_{Akt,\eta=1}$) durch Mittelung des maximalen und des minimalen Aktuatormomentes berechnet wird.

7. Verfahren nach Anspruch 5, **dadurch gekennzeichnet, daß** die Teilfläche derart ausgewertet wird, daß der Aktuatormomentwert ($M_{Akt,\eta=1}$) durch Berechnung der Ordinate der die Fläche halbierenden horizontalen Geraden bestimmt wird.

8. Verfahren nach Anspruch 5, **dadurch gekennzeichnet, daß** die Teilfläche derart ausgewertet wird, daß die Aktuatormomente aus beiden Zusammenhängen bei jeweils gleicher Aktuatorposition gemittelt werden und durch die entstehenden Mittelwerte eine Ausgleichsgerade gelegt wird, deren Ordinate als Schätzwert für den Aktuatormentwert ($M_{Akt,\eta=1}$) verwendet wird.

9. Verfahren nach Anspruch 5, **dadurch gekennzeichnet, daß** die Teilfläche derart ausgewertet wird, daß der Schwerpunkt der Teilfläche berechnet wird und seine Ordinate als Schätzwert für den Aktuatormomentwert ($M_{Akt,\eta=1}$) verwendet wird.

**10.** Verfahren nach einem der Ansprüche 1 bis 9, **dadurch gekennzeichnet, daß** die Aktuatormomente vor der Ermittlung des Wirkungsgrades des Getriebes um die Trägheitsmomente der Bremse korrigiert werden.

**11.** Verfahren nach einem der vorhergehenden Ansprüche, **dadurch gekennzeichnet, daß** die Bremse bei der Betätigung zusätzlich derart angesteuert wird, daß eine Aktuatorment-Aktuatorposition-Fläche durchfahren wird.

**12.** Verfahren nach Anspruch 11, **dadurch gekennzeichnet, daß** dem Betätigungssignal der Bremse ein sinus- oder cosinusförmiges Ansteuersignal überlagert wird.

**13.** Regelschaltung zum Aufbringen definierter Betätigungskräfte bei einer mittels eines Aktuators über ein Getriebe elektrisch betätigbaren Bremse, wobei beim Spannen der Bremse ein erster Zusammenhang zwischen der Aktuaterposition ($\varphi_{Akt}$) und dem Aktuatormoment ($M_{Akt}$) besteht und beim Lösen der Bremse ein zweiter Zusammenhang zwischen der Aktuatorpositon ($\varphi_{Akt}$) und dem Aktuatormoment ($M_{Akt}$) besteht, zur Durchführung des Verfahrens nach einem der Ansprüche 1 bis 12, **dadurch gekennzeichnet, daß**

a) ein Lageregler (10) vorgesehen ist, dem als Eingangssignal die Regeldifferenz ($\Delta\varphi_{Akt}$) zwischen einem die Aktuator-Sollposition ($\varphi_{Soll}$) und einem die Aktuator-Istposition ($\varphi_{Akt}$) repräsentierenden Signalen zugeführt wird und mit dessen Ausgangssignal (CMD) der Aktuator (15) über eine elektronische Leistungseinheit (12) angesteuert wird,

b) ein Bremsenmodell-Adaptionsmodul (13) vorgesehen ist, dem zur Adaption der dem Wirkungsgrad des Getriebes $\eta=1$ entsprechende Aktuatormomentwert ($M^*_{Akt,\eta=1,schatz}$), die die dazugehörigen Aktuatormomente ($M^*_{Akt}$) aus einem oder beiden Zusammenhängen zwischen der Aktuatorposition ($\varphi_{Akt}$) und dem Aktuatormoment ($M_{Akt}$) bzw. zwischen der Aktuatorposition ($\varphi_{Akt}$) und dem Aktuatormoment ($M_{Akt}$) oder die die dazugehörige Aktuatorposition ($\varphi^*_{Akt}$) repräsentierenden Signale zugeführt werden und das Modellgrößen für ein Bremsenmodell erzeugt,

c) dem Lageregler (10) ein Lagesollwertgenerator (11) vorgeschaltet ist, der das Bremsenmodell beinhaltet und dem ein der gewünschten Betätigungskraft entsprechendes Signal ($F_{Bet,soll}$) sowie die adaptierten Modellgrößen zugeführt werden und der aus dem Bremsenmodell das Aktuator-Sollpositionssignal ($\varphi_{soll}$) erzeugt,

d) ein Schätzmodul (14) vorgesehen ist, dem das dem Aktuatormoment ($M_{Akt}$) und das der Aktuatorposition ($\varphi_{Akt}$) entsprechende Signal zugeführt werden und das den dem Wirkungsgrad des Getriebes $\eta=1$ entsprechenden Aktuatormomentwert ($M^*_{Akt,\eta=1,schätz}$), die dazugehörigen Aktuatormomente ($M^*_{Akt}$) aus einem oder beiden Zusammenhängen zwischen der Aktuatorposition ($\varphi_{Akt}$) und dem Aktuatormoment ($M_{Akt}$) bzw. zwischen der Aktuatorposition ($\varphi_{Akt}$) und dem Aktuatormoment ($M_{Akt}$) oder die die dazugehörige Aktuatorposition ($\omega^*_{Akt}$) repräsentierenden Signale erzeugt.

**14.** Regelschaltung zum Aufbringen definierter Betätigungskräfte bei einer mittels eines Aktuators über ein Getriebe elektrisch betätigbaren Bremse, wobei beim Spannen der Bremse ein erster Zusammenhang zwischen der Aktuatorposition ($\varphi_{Akt}$) und dem Aktuatormoment ($M_{Akt}$) besteht und beim Lösen der Bremse ein zweiter Zusammenhang zwischen der Aktuatorposition ($\varphi_{Akt}$) und dem Aktuatormoment ($M_{Akt}$) besteht, zur Durchführung des Verfahrens nach einem der Ansprüche 1 bis 12 **dadurch gekennzeichnet, daß**

a) ein Momentenregler (22) vorgesehen ist, dem als Eingangssignal die Regeldifferenz ($\Delta M_{Akt}$) zwischen einem das Aktuator-Sollmoment ($M_{soll}$) und einem das Aktuator-Istmoment ($M_{Akt}$) repräsentierenden Signal zugeführt wird und mit dessen Ausgangssignal (CMD) der Aktuator (15) über eine elektronische Leistungseinheit (12) angesteuert wird,

b) ein Bremsenmodell-Adaptionsmodul (13) vorgesehen ist, dem zur Adaption der dem Wirkungsgrad des Getriebes $\eta=1$ entsprechende Aktuatormomentwert ($M^*_{Akt,\eta=1,schätz}$), die die dazugehörigen Aktuatormomente ($M^*_{Akt}$) aus einem oder beiden Zusammenhängen zwischen der Aktuatorposition ($\varphi_{Akt}$) und dem Aktuatormoment ($M_{Akt}$) bzw. zwischen der Aktuatorposition ($\varphi_{Akt}$) und dem Aktuatormoment ($M_{Akt}$) oder die die dazugehörige Aktuatorposition ($\varphi^*_{Akt}$) repräsentierenden Signale zugeführt werden und das Modellgrößen für ein Bremsenmodell erzeugt,

c) dem Momentenregler (22) ein Momentensollwertgenerator (23) vorgeschaltet ist, der das Bremsenmodell beinhaltet und dem ein der gewünschten Betätigungskraft entsprechendes Signal ($F_{Bet,soll}$) sowie die adaptierten Modellgrößen zugeführt werden und der aus dem Bremsenmodell das Aktuator-Sollmomentsignal ($M_{soll}$) erzeugt,

d) ein Schätzmodul (14) vorgesehen ist, dem das dem Aktuatormoment ($M_{Akt}$) und das der Aktuatorposition ($\varphi_{Akt}$) entsprechende Signal zugeführt werden und das dem Wirkungsgrad des Getriebes η=1 entsprechenden Aktuatormomentwert ($M'_{Akt,\eta=1,schätz}$), das die dazugehörigen Aktuatormomente ($M^*_{Akt}$) aus einem oder beiden Zusammenhängen zwischen der Aktuatorposition ($\varphi_{Akt}$) und dem Aktuatormoment ($M_{Akt}$) bzw. zwischen der Aktuatorposition ($\varphi_{Akt}$) und dem Aktuatormoment ($M_{Akt}$) oder die die dazugehörige Aktuatorposition ($\varphi^*_{Akt}$) repräsentierenden Signale erzeugt.

**15.** Regelschaltung zum Aufbringen definierter Betätigungskräfte bei einer mittels eines Aktuators über ein Getriebe elektrisch betätigbaren Bremse, wobei beim Spannen der Bremse ein erster Zusammenhang zwischen der Aktuatorposition ($\varphi_{Akt}$) und dem Aktuatormoment ($M_{Akt}$) besteht und beim Lösen der Bremse ein zweiter Zusammenhang zwischen der Aktuatorposition ($\varphi_{Akt}$) und dem Aktuatormoment ($M_{Akt}$) besteht, zur Durchführung des Verfahrens nach einem der Ansprüche 1 bis 12, **dadurch gekennzeichnet, daß**

a) ein Betätigungsregler (25) vorgesehen ist, dem als Eingangssignal die Regeldifferenz ($\Delta F_{Bet}$) zwischen einem den Betätigungskraft-Wunschwert ($F_{Bet,soll}$) und einem den rekonstruierten Betätigungskraft-Istwert ($F_{Betk,rek}$) repräsentierenden Signalen zugeführt wird und mit dessen Ausgangssignal (CMD) der Aktuator (15) über eine elektronische Leistungseinheit (12) angesteuert wird,

b) ein Bremsenmodell-Adaptionsmodul (13) vorgesehen ist, dem zur Adaption der dem Wirkungsgrad des Getriebes η=1 entsprechende Aktuatormomentwert ($M^*_{Akt,\eta=1,schatz}$) die die dazugehörigen Aktuatormomente ($M^*_{Akt}$) aus einem oder beiden Zusammenhängen zwischen der Aktuatorposition ($\varphi_{Akt}$) und dem Aktuatormoment ($M_{Akt}$) bzw. zwischen der Aktuatorposition ($\varphi_{Akt}$) und dem Aktuatormoment ($M_{Akt}$) oder die die dazugehörige Aktuatorposition ($\varphi^*_{Akt}$) repräsentierenden Signale zugeführt werden und das Modellgrößen für ein Bremsenmodell erzeugt,

c) dem Betätigungskraftregler (25) ein Betätigungskraftrekonstruktionsmodul (26) vorgeschaltet ist, das das Bremsenmodell beinhaltet und dem ein das Aktuator-Istmoment ($M_{Akt}$) oder ein die Aktuator-Istposition ($\varphi_{Akt}$) repräsentierendes Signal sowie die adaptierten Modellgrößen zugeführt werden und der aus dem Bremsenmodell den Betätigungskraft-Istwert ($F_{Bet,rek}$) erzeugt,

d) ein Schätzmodul (14) vorgesehen ist, dem das dem Aktuatormoment ($M_{Akt}$) und das der Aktuatorposition ($\varphi_{Akt}$) entsprechende Signal zugeführt werden und das den dem Wirkungsgrad des Getriebes η=1 entsprechenden Aktuatormomentwert ($M^*_{Akt,\eta=1,schätz}$), die die dazugehörigen Aktuatormomente ($M'_{Akt}$) aus einem oder beiden Zusammenhängen zwischen der Aktuatorposition ($\varphi_{Akt}$) und dem Aktuatormoment ($M_{Akt}$) bzw. zwischen der Aktuatorposition ($\varphi_{Akt}$) und dem Aktuatormoment ($M_{Akt}$) oder die die dazugehörigen Aktuatorposition ($\varphi^*_{Akt}$) repräsentierenden Signale erzeugt.

**16.** Regelschaltung nach einem der Ansprüche 13 bis 15, **dadurch gekennzeichnet, daß** das Bremsenmodell-Adaptionsmodul (13) die Bremsenmodellgrößen mittels Parameterschätzung berechnet.

**17.** Regelschaltung nach Anspruch 13 oder 15, **dadurch gekennzeichnet, daß** das Bremsenmodell die Steifigkeit der Bremse (17) abbildet.

**18.** Elektromechanisch betätigbare Bremse nach Anspruch 14 oder 15, **dadurch gekennzeichnet, daß** das Bremsenmodell den Wirkungsgrad der Bremse (17) abbildet.

**Claims**

**1.** A process for generating defined actuating forces for a brake that is actuatable electrically by means of an actuator and a gear, wherein a first relationship exists between the actuator position ($\varphi_{Act}$) and the actuator torque ($M_{Act}$) when the brake is applied and a second relationship exists between the actuator position ($\varphi_{Act}$) and the actuator torque ($M_{Act}$) when the brake is released, **characterized in that** the actuator torques ($M_{Act}$) resulting from the first and second relationships are evaluated to determine the efficiency (η) of the gear in order to determine an actuator torque value ($M_{Act,\eta=1}$) that has to be applied for the efficiency of the gear η=1.

2. A process according to Claim 1, **characterized in that** the actuator torques are evaluated at the same actuator positions ($\varphi_{Act}$).

3. A process according to Claim 1 or 2, **characterized in that** the actuator torque is determined from the actuator current ($I_{Act}$), or the actuator current ($I_{Act}$) and the actuator voltage ($U_{Act}$), or the actuator current ($I_{Act}$) and the actuator position ($\varphi_{Act}$), or the actuator voltage ($U_{Act}$) and the actuator position ($\varphi_{Act}$), or the actuator current ($I_{Act}$), the actuator voltage ($U_{Act}$) and the actuator position ($\varphi_{Act}$).

4. A process according to Claim 3, **characterized in that** an estimated value of the actuating force ($F_{ActF, estimate}$) is determined from the actuator torque value ($M_{Act,\eta=1}$) through the gear ratio.

5. A process according to one of the Claims 1 to 4, **characterized in that** an area corresponding to the actuator position range and delimited by the two relationships is evaluated.

6. A process according to Claim 5, **characterized in that** the area is evaluated in such a way that the actuator torque value ($M_{Act, \eta=1}$) is calculated by working out the mean of the maximum and minimum actuator torque.

7. A process according to Claim 5, **characterized in that** the area is evaluated in such a way that the actuator torque value ($M_{Act,\eta=1}$) is determined by calculating the ordinates of the horizontal straight lines cutting the area in half.

8. A process according to Claim 5, **characterized in that** the area is evaluated in such a way that the mean values of the actuator torques from both relationships are worked out at the same actuator position respectively and that a compensating straight line is established by means of the ensuing mean values, whose ordinate is used as an estimate for the actuator torque value ($M_{Act,\eta=1}$).

9. A process according to Claim 5, **characterized in that** the area is evaluated in such a way that the area's centre of gravity is calculated and its ordinate is used as an estimate of the actuator torque value ($M_{Act,\eta=1}$).

10. A process according to one of the Claims 1 to 9, **characterized in that** the actuator torques are corrected to take into consideration the inertia torques of the brake prior to determining the efficiency of the gear.

11. A process according to one of the preceding claims, **characterized in that** the brake, when it is applied, is additionally controlled in such a way that an actuator torque-actuator position area is passed through.

12. A process according to Claim 11, **characterized in that** a sinusoidal or cosine-shaped control signal is superimposed over the actuating signal.

13. A control circuit for generating defined actuating forces for a brake that is actuatable electrically by means of an actuator and a gear, wherein a first relationship exists between the actuator position ($\varphi_{Act}$) and the actuator torque ($M_{Act}$) when the brake is applied and a second relationship exists between the actuator position ($\varphi_{Act}$) and the actuator torque ($M_{Act}$) when the brake is released, for implementing the process according to one of the Claims 1 to 12, **characterized in that**

a) a position control device (10) is provided, to which the control difference ($\Delta\varphi_{Act}$) between a signal representing the desired actuator position ($\varphi_{desired}$) and a signal representing the actual actuator position ($\varphi_{Act}$) is supplied as the input signal and whose output signal (CMD) is used to drive the actuator (15) by way of an electronic energy unit (12);

b) a brake model adaptation module (13) is provided, to which the actuator torque value ($M^{*}_{Act,\eta=1, estimate}$) corresponding to the efficiency $\eta=1$ of the gear, the signals representing the appropriate actuator torques ($M^{*}_{Act}$) from one or both relationships between the actuator position ($\varphi_{Act}$) and the actuator torque ($M_{Act}$) or between the actuator position ($\varphi_{Act}$) and the actuator torque ($M_{Act}$) or representing the appropriate actuator position ($\varphi^{*}_{Act}$) are supplied for the adaptation, and which generates model variables for a brake model;

c) a desired position value generator (11) is connected upstream of the position control device (10), which contains the brake model and to which a signal ($F_{Act F,desired}$) corresponding to the desired actuating force as well as the adapted model variables are supplied and which generates the desired position signal for the actuator ($\varphi_{desired}$) on the basis of the brake model;

d) an estimating module (14) is provided, to which the signal corresponding to the actuator torque ($M_{Act}$) and the signal corresponding to the actuator position ($\varphi_{Act}$) are supplied, and which generates the actuator torque value ($M_{Act,\eta=1,estimate}$) corresponding to the efficiency $\eta=1$ of the gear, and the signals representing the appropriate actuator torques ($M^*_{Act}$) from one or both relationships between the actuator position ($\varphi_{Act}$) and the actuator torque ($M_{Act}$) or between the actuator position ($\varphi_{Act}$) and the actuator torque ($M_{Act}$) or representing the appropriate actuator position ($\varphi^*_{Act}$).

14. A control circuit for generating defined actuating forces for a brake that is actuatable electrically by means of an actuator and a gear, wherein a first relationship exists between the actuator position ($\varphi_{Act}$) and the actuator torque ($M_{Act}$) when the brake is applied and a second relationship exists between the actuator position ($\varphi_{Act}$) and the actuator torque ($M_{Act}$) when the brake is released, for implementing the process according to one of the Claims 1 to 12, **characterized in that**

a) a torque control device (22) is provided, to which the control difference ($\Delta M_{Act}$) between a signal representing the desired actuator torque ($M_{desired}$) and a signal representing the actual actuator torque ($M_{Act}$) is supplied as the input signal and whose output signal (CMD) is used to drive the actuator (15) by way of an electronic energy unit (12);

b) a brake model adaptation module (13) is provided, to which the actuator torque value ($M^*_{Act,\eta=1,estimate}$) corresponding to the efficiency $\eta=1$ of the gear, the signals representing the appropriate actuator torques ($M^*_{Act}$) from one or both relationships between the actuator position ($\varphi_{Act}$) and the actuator torque ($M_{Act}$) or between the actuator position ($\varphi_{Act}$) and the actuator torque ($M_{Act}$) or representing the appropriate actuator position ($\varphi^*_{Act}$) are supplied for the adaptation, and which generates model variables for a brake model;

c) a desired torque value generator (23) is connected upstream of the torque control device (22), which contains the brake model and to which a signal ($F_{ActF,desired}$) corresponding to the desired actuating force as well as the adapted model variables are supplied and which generates the desired torque signal for the actuator ($M_{desired}$) on the basis of the brake model;

d) an estimating module (14) is provided, to which the signal corresponding to the actuator torque ($M_{Act}$) and the signal corresponding to the actuator position ($\varphi_{Act}$) are supplied and which generates the actuator torque value ($M_{Act,\eta=1,estimate}$) corresponding to the efficiency $\eta=1$ of the gear, and the signals representing the appropriate actuator torques ($M^*_{Act}$) from one or both relationships between the actuator position ($\varphi_{Act}$) and the actuator torque ($M_{Act}$) or between the actuator position ($\varphi_{Act}$) and the actuator torque ($M_{Act}$) or representing the appropriate actuator position ($\varphi^*_{Act}$).

15. A control circuit for generating defined actuating forces for a brake that is actuatable electrically by means of an actuator and a gear, wherein a first relationship exists between the actuator position ($\varphi_{Act}$) and the actuator torque ($M_{Act}$) when the brake is applied and a second relationship exists between the actuator position ($\varphi_{Act}$) and the actuator torque ($M_{Act}$) when the brake is released, for implementing the process according to one of the Claims 1 to 12, **characterized in that**

a) an actuating force control device (25) is provided, to which the control difference ($\Delta F_{Act\,F}$) between a signal representing the desired actuating force ($F_{ActF,\,desired}$) and a signal representing the reconstructed actual actuating force value ($F_{ActF,rec}$) is supplied as the input signal and whose output signal (CMD) is used to drive the actuator (15) by way of an electronic energy unit (12);

b) a brake model adaptation module (13) is provided, to which the actuator torque value ($M^*_{Act,\eta=1,\,estimate}$) corresponding to the efficiency $\eta=1$ of the gear, the signals representing the appropriate actuator torques ($M^*_{Act}$) from one or both relationships between the actuator position ($\varphi_{Act}$) and the actuator torque ($M_{Act}$) or between the actuator position ($\varphi_{Act}$) and the actuator torque ($M_{Act}$) or representing the appropriate actuator position ($\varphi^*_{Act}$) are supplied for the adaptation, and which generates model variables for a brake model;

c) an actuating force reconstruction module (26) is connected upstream of the actuating force control device (25), which contains the brake model and to which signals representing the actual actuator torque ($M_{Act}$) or the actual actuator position ($\varphi_{Act}$) are supplied and which generates the actual actuating force value ($F_{Act\,F,\,rec}$) on the basis of the brake model;

**EP 1 019 274 B1**

d) an estimating module (14) is provided, to which the signal corresponding to the actuator torque ($M_{Act}$) and the signal corresponding to the actuator position ($\varphi_{Act}$) are supplied, and which generates the actuator torque value ($M^*_{Act,\eta=1,estimate}$) corresponding to the efficiency $\eta=1$ of the gear, and the signals representing the appropriate actuator torques ($M^*_{Act}$) from one or both relationships between the actuator position ($\varphi_{Act}$) and the actuator torque ($M_{Act}$) or between the actuator position ($\varphi_{Act}$) and the actuator torque ($M_{Act}$) or representing the appropriate actuator position ($\varphi^*_{Act}$) are supplied.

16. Control circuit according to one of the Claims 13 to 15, **characterized in that** the brake model adaptation module (13) calculates the brake model variables by means of parameter estimates.

17. Control circuit according to Claim 13 or 15, **characterized in that** the brake model depicts the rigidity of the brake (17).

18. An electromechanically actuatable brake according to Claim 14 or 15, **characterized in that** the brake model depicts the efficiency of the brake (17).

**Revendications**

1. Procédé d'application de forces d'actionnement définies dans le cas d'un frein pouvant être actionné électriquement au moyen d'un actionneur et par l'intermédiaire d'un dispositif de démultiplication, selon lequel une première relation existe entre la position d'actionneur ($\phi_{Akt}$) et le couple d'actionneur ($M_{Akt}$) lors du serrage du frein et une seconde relation existe entre la position d'actionneur ($\phi_{Akt}$) et le couple d'actionneur ($M_{Akt}$) lors du relâchement du frein, **caractérisé en ce que** les couples d'actionneur ($M_{Akt}$) résultant de la première relation et de la seconde relation sont exploités pour déterminer le degré d'efficacité ($\eta$) du dispositif de démultiplication en utilisant la détermination d'une valeur de couple d'actionneur ($M_{Akt,\eta=1}$) qui doit être appliquée pour le degré d'efficacité du dispositif de démultiplication $\eta= 1$.

2. Procédé suivant la revendication 1, **caractérisé en ce que** les couples d'actionneur sont exploités pour des positions d'actionneur ($\phi_{Akt}$) identiques.

3. Procédé suivant la revendication 1 ou 2, **caractérisé en ce que** le couple d'actionneur est déterminé à partir du courant d'actionneur ($I_{Akt}$), ou du courant d'actionneur ($I_{Akt}$) et de la tension d'actionneur ($U_{Akt}$), ou du courant d'actionneur ($I_{Akt}$) et de la position d'actionneur ($\phi_{Akt}$), ou de la tension d'actionneur ($U_{Akt}$) et de la position d'actionneur ($\phi_{Akt}$), ou du courant d'actionneur ($I_{Akt}$), de la tension d'actionneur ($U_{Akt}$) et de la position d'actionneur ($\phi_{Akt}$).

4. Procédé suivant la revendication 3, **caractérisé en ce qu'**une valeur d'estimation de la force d'actionnement ($F_{Bet,schätz}$) est déterminée à partir de la valeur de couple d'actionneur ($M_{Akt,\eta=1}$) au moyen du rapport de démultiplication du dispositif de démultiplication.

5. Procédé suivant l'une des revendications 1 à 4, **caractérisé en ce qu'**une aire partielle correspondant à un domaine de position d'actionneur et délimitée au moyen des deux relations est exploitée.

6. Procédé suivant la revendication 5, **caractérisé en ce que** l'aire partielle est exploitée d'une manière telle que la valeur de couple d'actionneur ($M_{Akt,\eta=1}$) est calculée au moyen d'une formation de moyenne du couple d'actionneur maximal et du couple d'actionneur minimal.

7. Procédé suivant la revendication 5, **caractérisé en ce que** l'aire partielle est exploitée d'une manière telle que la valeur de couple d'actionneur ($M_{Akt,\eta=1}$) est déterminée au moyen d'un calcul de l'ordonnée de la droite horizontale divisant l'aire en deux moitiés.

8. Procédé suivant la revendication 5, **caractérisé en ce que** l'aire partielle est exploitée d'une manière telle que les couples d'actionneur en provenance des deux relations font l'objet d'une formation de moyenne pour une position d'actionneur chaque fois identique pour chacune et, au moyen des valeurs moyennes obtenues, une droite de compensation est tracée dont l'ordonnée est utilisée en tant que valeur d'estimation pour la valeur de couple d'actionneur ($M_{Akt,\eta=1}$).

**15**

9. Procédé suivant la revendication 5, **caractérisé en ce que** l'aire partielle est exploitée d'une manière telle que le barycentre de l'aire partielle est calculé et son ordonnée est utilisée en tant que valeur d'estimation pour la valeur de couple d'actionneur ($M_{Akt,\eta=1}$).

10. Procédé suivant l'une des revendications 1 à 9, **caractérisé en ce que** les couples d'actionneur sont corrigés, avant la formation de moyenne du degré d'efficacité du dispositif de démultiplication, de la valeur des couples d'inertie du frein.

11. Procédé suivant l'une des revendications précédentes, **caractérisé en ce que**, lors de l'actionnement, le frein est en outre commandé d'une manière telle qu'une aire couple d'actionneur-position d'actionneur est parcourue.

12. Procédé suivant la revendication 11, **caractérisé en ce qu'**un signal de commande en forme de fonction sinus ou de fonction cosinus est superposé au signal d'actionnement.

13. Circuit de régulation permettant d'appliquer des forces d'actionnement définies dans le cas d'un frein pouvant être actionné électriquement au moyen d'un actionneur et par l'intermédiaire d'un dispositif de démultiplication, selon lequel une première relation existe entre la position d'actionneur ($\phi_{Akt}$) et le couple d'actionneur ($M_{Akt}$) lors du serrage du frein et une seconde relation existe entre la position d'actionneur ($\phi_{Akt}$) et le couple d'actionneur ($M_{Akt}$) lors du relâchement du frein, servant à la mise en oeuvre du procédé suivant l'une des revendications 1 à 12, **caractérisé en ce que** :

a) il est prévu un régulateur de position (10) auquel est envoyée, en tant que signal d'entrée, la différence de régulation ($\Delta\phi_{Akt}$) entre un signal représentant la position de consigne d'actionneur ($\phi_{soll}$) et un signal représentant la position réelle d'actionneur ($\phi_{Akt}$) et au moyen du signal de sortie (CMD) duquel l'actionneur (15) est commandé par l'intermédiaire d'une unité de puissance électronique (12),
b) il est prévu un module d'adaptation de modèle de frein (13) auquel sont envoyés, pour l'adaptation de la valeur de couple d'actionneur ($M^{*}_{Akt,\eta=1,schätz}$) correspondant au degré d'efficacité du dispositif de démultiplication M= 1, les signaux représentant les couples d'actionneur ($M^{*}_{Akt}$), associés à celle-ci, provenant de l'une ou des deux relations soit entre la position d'actionneur ($\phi_{Akt}$) et le couple d'actionneur ($M_{Akt}$), soit entre la position d'actionneur ($\phi_{Akt}$) et le couple d'actionneur ($M_{Akt}$) ou les signaux représentant la position d'actionneur ($\phi^{*}_{Akt}$) associée à celle-ci, et qui produit des grandeurs de modèle pour un modèle de frein,
c) il est prévu, connecté en amont du régulateur de position (10), un générateur de valeur de consigne de position (11) qui contient le modèle de frein et auquel sont envoyés un signal ($F_{Bet,soll}$) correspondant à la force d'actionnement voulue et les grandeurs de modèle adaptées et qui produit, à partir du modèle de frein, le signal de position de consigne d'actionneur ($\phi_{soll}$),
d) il est prévu un module d'estimation (14) auquel sont envoyés le signal correspondant au couple d'actionneur ($M_{Akt}$) et le signal représentant la position d'actionneur ($\phi_{Akt}$) et qui produit la valeur de couple d'actionneur ($M^{*}_{Akt,\eta=1,schätz}$) correspondant au degré d'efficacité du dispositif de démultiplication $\eta = 1$, les couples d'actionneur ($M^{*}_{Akt}$), associés à celle-ci, provenant de l'une ou des deux relations soit entre la position d'actionneur ($\phi_{Akt}$) et le couple d'actionneur ($M_{Akt}$), soit entre la position d'actionneur ($\phi_{Akt}$) et le couple d'actionneur ($M_{Akt}$) ou les signaux représentant la position d'actionneur ($\phi^{*}_{Akt}$) associée à celle-ci.

14. Circuit de régulation permettant d'appliquer des forces d'actionnement définies dans le cas d'un frein pouvant être actionné électriquement au moyen d'un actionneur et par l'intermédiaire d'un dispositif de démultiplication, selon lequel une première relation existe entre la position d'actionneur ($\phi_{Akt}$) et le couple d'actionneur ($M_{Akt}$) lors du serrage du frein et une seconde relation existe entre la position d'actionneur ($\phi_{Akt}$) et le couple d'actionneur ($M_{Akt}$) lors du relâchement du frein, servant à la mise en oeuvre du procédé suivant l'une des revendications 1 à 12, **caractérisé en ce que** :

a) il est prévu un régulateur de couple (22) auquel est envoyée, en tant que signal d'entrée, la différence de régulation ($\Delta M_{Akt}$) entre un signal représentant la position de consigne d'actionneur ($M_{soll}$) et un signal représentant la position réelle d'actionneur ($M_{Akt}$) et au moyen du signal de sortie (CMD) duquel l'actionneur (15) est commandé par l'intermédiaire d'une unité de puissance électronique (12),
b) il est prévu un module d'adaptation de modèle de frein (13) auquel sont envoyés, pour l'adaptation de la valeur de couple d'actionneur ($M^{*}_{Akt,\eta=1,schätz}$) correspondant au degré d'efficacité du dispositif de démultiplication M = 1, les signaux représentant les couples d'actionneur ($M^{*}_{Akt}$), associés à celle-ci, provenant de l'une ou des deux relations soit entre la position d'actionneur ($\phi_{Akt}$) et le couple d'actionneur ($M_{Akt}$), soit entre la position d'actionneur ($\phi_{Akt}$) et le couple d'actionneur ($M_{Akt}$) ou les signaux représentant la position d'actionneur

($\phi^*_{Akt}$) associée à celle-ci, et qui produit des grandeurs de modèle pour un modèle de frein,

c) il est prévu, connecté en amont du régulateur de couple (22), un générateur de valeur de consigne de couple (23) qui contient le modèle de frein et auquel sont envoyés un signal ($F_{Bet,soll}$) correspondant à la force d'actionnement voulue et les grandeurs de modèle adaptées et qui produit, à partir du modèle de frein, le signal de couple de consigne d'actionneur ($M_{soll}$),

d) il est prévu un module d'estimation (14) auquel sont envoyés le signal correspondant au couple d'actionneur ($M_{Akt}$) et le signal représentant la position d'actionneur ($\phi_{Akt}$) et qui produit la valeur de couple d'actionneur ($M^*_{Akt,\eta=1,schätz}$) correspondant au degré d'efficacité du dispositif de démultiplication $\eta = 1$, les couples d'actionneur ($M^*_{Akt}$), associés à celle-ci, provenant de l'une ou des deux relations soit entre la position d'actionneur ($\phi_{Akt}$) et le couple d'actionneur ($M_{Akt}$), soit entre la position d'actionneur ($\phi_{Akt}$) et le couple d'actionneur ($M_{Akt}$) ou les signaux représentant la position d'actionneur ($\phi^*_{Akt}$) associée à celle-ci.

15. Circuit de régulation permettant d'appliquer des forces d'actionnement définies dans le cas d'un frein pouvant être actionné électriquement au moyen d'un actionneur et par l'intermédiaire d'un dispositif de démultiplication, selon lequel une première relation existe entre la position d'actionneur ($\phi_{Akt}$) et le couple d'actionneur ($M_{Akt}$) lors du serrage du frein et une seconde relation existe entre la position d'actionneur ($\phi_{Akt}$) et le couple d'actionneur ($M_{Akt}$) lors du relâchement du frein, servant à la mise en oeuvre du procédé suivant l'une des revendications 1 à 12, **caractérisé en ce que** :

a) il est prévu un régulateur d'actionnement (25) auquel est envoyée, en tant que signal d'entrée, la différence de régulation ($\Delta F_{Bet}$) entre un signal représentant la valeur souhaitée de force d'actionnement ($F_{Bet,soll}$) et un signal représentant la valeur réelle de force d'actionnement reconstruite ($F_{Betk,rek}$) et au moyen du signal de sortie (CMD) duquel l'actionneur (15) est commandé par l'intermédiaire d'une unité de puissance électronique (12),

b) il est prévu un module d'adaptation de modèle de frein (13) auquel sont envoyés, pour l'adaptation de la valeur de couple d'actionneur ($M^*_{Akt,\eta=1,schätz}$) correspondant au degré d'efficacité du dispositif de démultiplication M= 1, les signaux représentant les couples d'actionneur ($M^*_{Akt}$), associés à celle-ci, provenant de l'une ou des deux relations soit entre la position d'actionneur ($\phi_{Akt}$) et le couple d'actionneur ($M_{Akt}$), soit entre la position d'actionneur ($\varphi_{Akt}$) et le couple d'actionneur ($M_{Akt}$) ou les signaux représentant la position d'actionneur ($\varphi^*_{Akt}$) associée à celle-ci, et qui produit des grandeurs de modèle pour un modèle de frein,

c) il est prévu, connecté en amont du régulateur de force d'actionnement (25), un module de reconstruction de force d'actionnement (26) qui contient le modèle de frein et auquel sont envoyés un signal représentant le couple réel d'actionneur ($M_{Akt}$) ou un signal représentant la position réelle d'actionneur ($\phi_{Akt}$), ainsi que les grandeurs de modèle adaptées, et qui produit, à partir du modèle de frein, la valeur réelle de force d'actionnement ($F_{Bet,rek}$),

d) il est prévu un module d'estimation (14) auquel sont envoyés le signal correspondant au couple d'actionneur ($M_{Akt}$) et le signal représentant la position d'actionneur ($\phi_{Akt}$) et qui produit la valeur de couple d'actionneur ($M^*_{Akt,\eta=1,schätz}$) correspondant au degré d'efficacité du dispositif de démultiplication $\eta = 1$, les couples d'actionneur ($M^*_{Akt}$), associés à celle-ci, provenant de l'une ou des deux relations soit entre la position d'actionneur ($\phi_{Akt}$) et le couple d'actionneur ($M_{Akt}$), soit entre la position d'actionneur ($\phi_{Akt}$) et le couple d'actionneur ($M_{Akt}$) ou les signaux représentant la position d'actionneur ($\phi^*_{Akt}$) associée à celle-ci.

16. Circuit de régulation suivant l'une des revendications 13 à 15, **caractérisé en ce que** le module d'adaptation de modèle de frein (13) calcule les grandeurs de modèle de frein au moyen d'une estimation de paramètres.

17. Circuit de régulation suivant la revendication 13 ou 15, **caractérisé en ce que** le modèle de frein reproduit la rigidité du frein (17).

18. Frein à actionnement électromécanique suivant la revendication 14 ou 15, **caractérisé en ce que** le modèle de frein reproduit le rendement du frein (17).

Fig. 1

$M_{Akt}$ [Nm]

$M_{Akt}$ für $\eta = 1$

$M_{Akt}$ für $\eta < 1$

spannen

lösen

0

0

$\varphi_{Akt}$ [rad]

Fig. 2

$\varphi$ [rad]

A

E

1

2

B

D

C

t [s]

Fig. 3

Fig. 4

Fig. 5

Fig. 6

Fig. 7

Fig. 8

Fig. 9

# Fig. 11

EP 1 019 274 B1

Fig. 10

EP 1 019 274 B1

Fig. 12

# Fig. 13

# Fig. 14

EP 1 019 274 B1